# EUROPÄISCHE PATENTSCHRIFT

(11) **EP 3 694 713 B1**
(45) Veröffentlichungstag und Bekanntmachung des Hinweises auf die Patenterteilung: **27.12.2023**
(21) Anmeldenummer: 18785347.8
(22) Anmeldetag: 09.10.2018
(51) Int. Cl.: B32B 27/10, C09D 123/08, D21H 27/20

(54) **BESCHICHTUNGSZUSAMMENSETZUNG, INSBESONDERE ZUR HERSTELLUNG EINER BESCHICHTETEN WAND-, BODEN UND DECKENBEKLEIDUNG, INSBESONDERE ZUR HERSTELLUNG EINER BESCHICHTETEN TAPETE**
COATING COMPOSITION, IN PARTICULAR FOR PRODUCING A COATED WALL, FLOOR OR CEILING COVERING, IN PARTICULAR FOR PRODUCING COATED WALLPAPER
COMPOSITION DE REVÊTEMENT DESTINÉE NOTAMMENT À LA FABRICATION D'UN HABILLAGE DE MUR, DE SOL ET DE PLAFOND REVÊTU, NOTAMMENT AUX FINS DE FABRICATION D'UN PAPIER PEINT REVÊTU

(30) Priorität: 09.10.2017 DE 202017005179 U
(43) Veröffentlichungstag der Anmeldung: 19.08.2020
(60) Teilanmeldung: 22214636.7
(73) Patentinhaber: Follmann GmbH & Co. KG, 32423 Minden (DE)
(72) Erfinder: BÖSE, Hans-Jürgen, 31595 Steyerberg (DE); GEISEL, Bernd, 32 469 Minden (DE); KLIMPKE, Harald, 32469 Petershagen (DE); KRÖGER, Elke, 32369 Rahden (DE); PETTER, Christoph, 31675 Bückeburg (DE); RETHMEIER, Annika, 32469 Petershagen (DE)
(74) Vertreter: König Szynka Tilmann von Renesse Patentanwälte Partnerschaft mbB Düsseldorf
(86) Internationale Anmeldenummer: PCT/EP2018/077481
(87) Internationale Veröffentlichungsnummer: WO 2019/072849

(56) Entgegenhaltungen:
- DE-A1- 2 001 453
- JP-A- 2002 096 433
- JP-A- 2006 272 852
- KR-A- 20150 074 610

## Beschreibung

Die vorliegende Erfindung betrifft eine Beschichtungszusammensetzung zur Herstellung eines beschichteten Substrats, insbesondere zur Herstellung einer beschichteten Wand- , Boden und Deckenbekleidung, wie z.B. zur Herstellung einer beschichteten Tapete. Zudem betrifft die vorliegende Erfindung ein mit der Beschichtungszusammensetzung beschichtetes Substrat, insbesondere eine beschichtete Wand-, Boden und Deckenbekleidung, wie eine beschichtete Tapete. Ebenso betrifft die Erfindung ein Verfahren zur Herstellung eines beschichteten Substrats und insbesondere einer beschichteten Wand-, Boden und Deckenbekleidung.

Das erfindungsgemäß beschichtete Substrat zeichnet sich insbesondere durch eine verbesserte Planlage sowie Anbringbarkeit bei gleichzeitig guter Bedruckbarkeit und Prägbarkeit aus.

Beschichtete Wand-, Boden und Deckenbekleidungen werden nahezu in allen öffentlichen und privaten Gebäuden eingesetzt. Während die Beschichtung, üblicherweise eine Polymerbeschichtung, auf einem Bodenbelag in erster Linie die Verschleißbeständigkeit erhöhen und die Rutschfestigkeit des Bodenbelags einstellen soll, ist es unter anderem der Zweck der Polymerbeschichtung auf einer Wandbekleidung (wie einer Tapete), eine gute Bedruckbarkeit und Pflegeleichtigkeit zu gewährleisten. Weit verbreitet sind mit Polyvinylchlorid (PVC) beschichtete Tapeten, die aufgrund ihrer guten Pflegeleichtigkeit und schweren Entflammbarkeit häufig als Wandbekleidung in Hotelzimmern, Bädern, Duschen, Fluren, Treppenhäusern, Küchen, Kinderzimmern, Schulen, Büros und Behörden eingesetzt werden. Von diesen beschichteten Tapeten lassen sich selbst starke Verschmutzungen leicht mit Bürsten und Wasser oder milden Seifenlaugen entfernen. Ein weiteres prominentes Einsatzgebiet von PVC sind Schaumstrukturtapeten, auf denen reliefartige Oberflächen geformt werden können, die den auf der Oberfläche abgebildeten Mustern eine räumliche Dimension verleihen.

Allerdings weisen PVC enthaltende bzw. mit PVC beschichtete Wand-, Boden und Deckenbekleidungen, wie Tapeten, erhebliche Nachteile auf. Das chlorhaltige Polymer PVC setzt mit der Zeit Chlorwasserstoffgas frei und bildet im Fall eines Brandes hochgiftige Dioxine, weswegen PVC enthaltene beschichtete Wand-, Boden und Deckenbekleidungen eine potentielle Gefahr für die Gesundheit der Bewohner darstellt. Ferner üben die PVC enthaltenden Tapeten aufgrund ihrer im Vergleich zu Papier-Tapeten geringeren Wasserdampfdurchlässigkeit einen nachteiligen Einfluss auf das Raumklima aus, was ein häufiges und gutes Lüften der damit ausgekleideten Räume erfordert. Insbesondere in energetisch optimierten Gebäuden kann es im Falle von PVC enthaltenden Tapeten durch den normgerecht eingestellten Luftwechsel von 0,5 Mal pro Stunde und Verzicht auf Lüften über Fenster zu bedenklich hohen Schadstoffkonzentrationen kommen.

Aus den vorgenannten Gründen ist in den letzten Jahren versucht worden, die PVC-Beschichtungen auf Wand-, Boden und Deckenbekleidungen durch Polymerbeschichtungen zu ersetzen, die sich durch weniger Emission gesundheitsbedenkliche Verbindungen sowie durch einen weniger nachteiligen Einfluss auf das Raumklima auszeichnen und die im Falle eines Brandes keine oder zumindest weniger giftige Verbrennungsprodukte erzeugen.

In DE 41 20 306 A1 wird ein Verfahren zur Herstellung einer Strukturschaumstofftapete beschrieben, bei dem eine Papiersubstratbahn über einen erhitzten Thermoplast als Klebemittel mit einem Schaumstoff gleicher Art beschichtet und sodann der Schaumstoff von einer Prägewalze mit der gewünschten Oberflächenstruktur versehen wird. Als Thermoplast werden insbesondere Polyethylen, Polypropylen, Polystyrol und Polyester vorgeschlagen, also Polymere, die keine schädlichen Halogene oder andere unverträgliche Substanzen enthalten. Nachteilig bei diesen Tapeten ist es jedoch, dass diese beim Tapezieren ein sehr starkes Curlen bzw. Kräuseln bzw. Zusammenrollen in Richtung der Beschichtung aufweisen, was deren Anbringung an die Wand erschwert oder gar unmöglich macht. Dies gilt insbesondere für ein Anbringen der Tapeten mittels Wandklebetechnik, bei der zunächst mit einer Rolle oder einer Bürste Kleister bahnenweise und gleichmäßig auf die Wand aufgetragen wird, bevor die Tapete aufgebracht und beispielsweise mit einem sauberen Tuch, einem weichen Roller oder einer Bürste angedrückt wird. Diese Technik erlaubt ein einfaches und schnelles Anbringen von Wandbelägen an eine Wand, erfordert jedoch einen planen Wandbelag, der auch nach dem Anbringen auf den Kleister plan bleibt. Curlende bzw. sich kräuselnde Tapeten können mit dieser Technik nicht oder zumindest nicht mit dem gewünschten Resultat an Wände angebracht werden.

Aus der DE 195 30 508 A1 ist eine Tapete mit einer Sichtseitenschicht aus Polyethylenfaservlies bekannt. Das Polyethylenfaservlies besteht aus einem thermischmechanisch verfestigten Faservlies aus Polyethylen (PE)-Endlosfasern und ist sowohl trocken als auch nass bilateral hochfest und unter praxisüblichen Beanspruchungen unzerreißbar. Allerdings sind diese Tapeten insofern nachteilig, als zur Gestaltung der Tapetenoberfläche in einem Design nur wenige Optionen zur Verfügung stehen. Zudem ist es durch die faserige Oberfläche nicht möglich, mittels einer Prägeeinrichtung feine Strukturen zu erzeugen. Außerdem führt die Verbindung aus einem sehr stark quellenden Papier mit einem hochfesten nicht quellenden PE-Vlies zu einem starken Curlen, so dass eine Verarbeitung der Tapete mit der Wandklebetechnik nicht oder nur mit unbefriedigendem Ergebnis möglich ist.

In der DE 86 00 174 U1 wird eine Tapete mit einer Trägerschicht aus Papier und einer Sichtseitenschicht aus Polyethylen beschrieben, bei der die Trägerschicht aus mehreren Papierschichten aufgebaut ist und ein spezifisches Flächengewicht von 180 bis 230 Gramm pro Quadratmeter aufweist und die Sichtseitenschicht aus Polyethylen ein spezifisches Flächengewicht von mindestens 15 Gramm pro Quadratmeter aufweist. Auch diese Tapete ist jedoch für die Verarbeitung mit der Wandklebetechnik nicht geeignet, da sie stark curlt.

In der DE 26 59 192 A1 wird eine bedruckte Tapete vorgeschlagen, die aus einem Papierträger und einer abwaschbaren Beschichtung besteht, wobei die Beschichtung aus einem durchsichtigen Polyolefin zusammengesetzt ist. Auch diese Tapete ist für ein Anbringen mit der Wandklebetechnik an eine Wand nicht geeignet, da das Polyolefin stark kristallisiert und beim Abkühlungsprozess schrumpft, weswegen sich die Tapete durch ein starkes Curlen auszeichnet.

Die JP 2002-096433 A beschreibt PVC-freie Wandbekleidungen, die mit einer Zusammensetzungen aus EVA und Füllstoffen beschichtet sind.

Die KR 2015-0074610 A1 beschreibt selbstklebende Wandtapeten.

Aufgabe der vorliegenden Erfindung ist die Bereitstellung einer Beschichtungszusammensetzung, welche insbesondere zum Beschichten eines bahnförmigen Substrats und insbesondere zum Herstellen einer flexiblen Wand-, Boden oder Deckenbekleidung in Rollenform geeignet ist, die die oben genannten Probleme zumindest verbessert oder vermeidet.

Insbesondere ist es wünschenswert, dass die mit der Beschichtungszusammensetzung beschichtete Wand-, Boden oder Deckenbekleidung auch mit einer Klebetechnik möglichst plan und ohne oder zumindest ohne nennenswertes Curling verarbeitet werden kann. Vorteilhaft ist es zudem, dass sie möglichst gut mit herkömmlichen Farben bedruckbar ist.

Eine weitere Herausforderung ist, dass die für die Herstellung der Wand-, Boden oder Deckenbekleidung einsetzbare Beschichtungsmasse möglichst keine oder kaum gesundheitsgefährdende Verbindungen freisetzt, welche einen nachteiligen Einfluss auf das Raumklima aufweise könnten, und/oder im Falle eines Brandes keine oder zumindest weniger giftige Verbrennungsprodukte erzeugt.

Erfindungsgemäß wird die Aufgabe durch die Bereitstellung einer Beschichtungszusammensetzung zur Herstellung eines beschichteten Substrats und insbesondere zur Herstellung einer beschichteten Wand-, Boden und Deckenbekleidung gelöst, welche enthält:
a) 15 bis 80 Gew.-% mindestens eines Ethylenvinylacetat-Copolymers,
b) 0,1 bis 30 Gew.-% mindestens eines Kohlenwasserstoffharzes,
c) 0,1 bis 20 Gew.-% mindestens eines Wachses,
d) 0,1 bis 80 Gew.-% wenigstens eines Füllstoffes,
e) 0,01 bis 20 Gew.-% mindestens eines Gleitmittels, welches ein Carbonsäureamid ist, und
f) optional 0,0 bis 10 Gew.-% eines Treibmittels
wobei die Summe aller Bestandteile der Zusammensetzung 100 Gew.-% beträgt.

Erfindungsgemäß beträgt die Summe aller Bestandteile der Beschichtungszusammensetzung 100 Gew.-%. Sofern die Beschichtungszusammensetzung aus den Bestandteilen a) bis f) besteht, beträgt mithin die Summe der Bestandteile a) bis f) 100 Gew.-%. Sofern die Beschichtungszusammensetzung neben den Bestandteilen a) bis f) weitere Bestandteile, wie beispielsweise Additive h) und i) enthält, beträgt die Summe der Bestandteile a) bis i) 100 Gew.-%.

Diese Lösung beruht auf der Erkenntnis, dass durch die vorgenannte Kombination aus Ethylenvinylacetat-Copolymer, Kohlenwasserstoffharz, Wachs und Gleitmittel eine Beschichtungszusammensetzung erhalten wird, die nach dem Beschichten eines entsprechenden bahnförmigen Substrats, wie einer Papiertapete, zu einem beschichteten Substrat mit besonders vorteilhaften Eigenschaften führt. Bei diesen Eigenschaften handelt es sich vor allem um die Oberflächen- und Abriebfestigkeit sowie um die Härte und Wärmebeständigkeit; außerdem auch um die Bedruckbarkeit und Verarbeitbarkeit.

Insbesondere sind die entsprechenden beschichteten Substrate mit gängigen Druckfarben und insbesondere wässrigen Druckfarben mit den üblichen Druckverfahren, wie Tief-, Flexo-, Inkjet- und Siebdruckverfahren, hervorragend bedruckbar.

Eine besondere Eigenschaft der erfindungsgemäßen Beschichtungszusammensetzung ist deren geringe Klebrigkeit und kurze "offene Zeit". Üblicherweise sind dies Indizien für ein sehr kristallines Material. Die erfindungsgemäße Beschichtung weist jedoch eine überraschend geringe Kristallisation auf. Vorteile entstehen dadurch im Beschichtungsprozess und auch bei üblichen Druckverfahren. Stark kristallines Material wird beim Abkühlen bzw. Erstarren auf dem Substrat schrumpfen und so ein Curling der Beschichtung verursachen. Eine Maschinengängigkeit wäre somit nicht mehr gewährleistet.

Auf Grund der geringen Kristallisation und der daraus resultierenden Planlage sind die mit der erfindungsgemäßen Beschichtungszusammensetzung beschichteten Substrate auch mit einer Klebetechnik - bei der z.B. zunächst mit einer Rolle oder einer Bürste Kleister bahnenweise und gleichmäßig auf den Boden, die Wand oder die Decke aufgetragen wird, bevor die Wand-, Boden oder Deckenbekleidung darauf aufgebracht und beispielsweise mit einem sauberen Tuch, einem weichen Roller oder einer Bürste angedrückt wird - plan und ohne oder zumindest ohne nennenswertes Curling auf den Boden, die Wand oder die Decke anbringbar. Insbesondere können daher mit der erfindungsgemäßen Beschichtungszusammensetzung beschichtete Tapeten mit der Wandklebetechnik einfach und zuverlässig plan auf eine Wand angebracht werden.

Die erfindungsgemäße Beschichtungszusammensetzung eignet sich insbesondere auch zur Herstellung von Strukturschaumstofftapeten. Ferner setzt die erfindungsgemäße Beschichtungszusammensetzung keine gesundheitsgefährdenden Verbindungen und insbesondere keine halogenhaltigen Verbindungen frei, da die erfindungsgemäße Beschichtungszusammensetzung nicht den Zusatz von halogenhaltigen Verbindungen, wie PVC, oder von anderen bedenkliche Verbindungen freisetzenden Polymeren erfordert.

Außerdem weist die erfindungsgemäße Beschichtungszusammensetzung eine angemessene Wasserdampfdurchlässigkeit auf, so dass ein mit der erfindungsgemäßen Beschichtungszusammensetzung beschichtetes Substrat keinen nachteiligen Einfluss auf das Raumklima ausübt. Schließlich erzeugt die erfindungsgemäße Beschichtungszusammensetzung aufgrund deren Zusammensetzung im Falle eines Brandes keine oder zumindest wenig giftige Verbrennungsprodukte.

Unter einem Kohlenwasserstoffharz wird im Sinne der vorliegenden Erfindung eine Kohlenstoff und Wasserstoff enthaltende Verbindung mit einem gewichtsgemittelten Molekulargewicht von 100 bis 10.000 g/mol verstanden. Bevorzugt sind mindestens 90% und weiter bevorzugt mindestens 95% der Verbindung Kohlenstoff- und Wasserstoffatome, wohingegen der Rest Heteroatome, wie beispielsweise Stickstoff- oder Sauerstoffatome, sein können. Bevorzugt beträgt das gewichtsgemittelte Molekulargewicht des Kohlenwasserstoffharzes 100 bis 3.000 g/mol.

Das Kohlenwassestoffharz ist bevorzugt ausgewählt aus der folgenden Gruppe: aliphatische Harze, cycloaliphatische Harze, Inden-Cumaron-Harze, Polystyrolharze, Polymethylstyrolharze und beliebige Mischungen aus zwei oder mehr der vorgenannten Verbindungen.

Insbesondere bevorzugt ist das Harz ausgewählt aus der folgenden Gruppe: cycloaliphatisches Harz, Inden-Cumaron-Harz und/oder ein Polymethylstyrolharz. Weiter bevorzugt ist ein Dicyclopentadienharz, ein Inden-Cumaron-Harz und/oder ein Polyalphamethylstyrolharz oder Mischungen davon.

Ganz besonders bevorzugt ein Inden-Cumaron-Harz oder ein Dicyclopentadienharz mit einem gewichtsgemittelten Molekulargewicht von 200 bis 1,000 g/mol und/oder ein Poly-alpha-methylstyrolharz mit einem gewichtsgemittelten Molekulargewicht von 500 bis 2,000 g/mol enthalten ist. Die am meisten bevorzugte Ausführungsform ist ein Inden-Cumaron-Harz. Bei letzterem handelt es sich um ein dem Fachmann bestens bekanntes Polymerisationsprodukt von Cumaron und Inden und verwandten Verbindungen. Dies wird häufig in der Anstrich- und Beschichtungstechnik eingesetzt.

Die Funktion des Kohlenwasserstoffharzes ist insbesondere die eines Plastifizierungsmittels und/oder Polymer-Modifizierungsmittels. Es kann insbesondere auch als die Adhäsion verbessern und somit die Funktion eines Adäsionspromotors ausüben.

Der Wortbestandteil "Harz" weist dabei keine über die vorstehende Definition - d.h. das definierte Molekulargewicht und die atomare Zusammensetzung - hinausgehende Bedeutung auf.

Erfindungsgemäß enthält die Beschichtungszusammensetzung 0,01 bis 20 Gew.-% mindestens eines Carbonsäureamids als Gleitmittel.

Der Zusatz des Gleitmittels führt zu einer Verringerung der Klebrigkeit der Beschichtungszusammensetzung und trägt neben dem Ethylenvinylacetat-Copolymer, dem Kohlenwasserstoffharz und dem Wachs zu einer Vermeidung von Curling eines mit der Beschichtungszusammensetzung beschichteten Substrats bei.

Gute Ergebnisse werden dabei insbesondere erhalten, wenn das mindestens eine Gleitmittel ein Carbonsäureamid gemäß der allgemeinen Formel (I) und/oder eines Salzes hiervon ist, 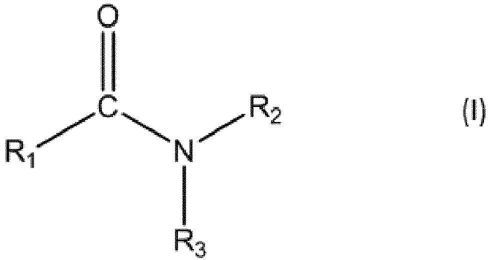 worin
R₁ eine substituierte oder unsubstituierte, geradkettige oder verzweigte Alkylgruppe, eine substituierte oder unsubstituierte, geradkettige oder verzweigte Alkenylgruppe, eine substituierte oder unsubstituierte, geradkettige oder verzweigte Alkinylgruppe, eine substituierte oder unsubstituierte cycloaliphatische Gruppe, eine substituierte oder unsubstituierte aromatische Gruppe, eine substituierte oder unsubstituierte heterozyklische Gruppe, eine substituierte oder unsubstituierte Alkoxygruppe, eine substituierte oder unsubstituierte Alkoxycarbonylgruppe, eine substituierte oder unsubstituierte Carboxylgruppe oder eine substituierte oder unsubstituierte Alkylamidgruppe ist und
R₂ und R₃ gleich oder verschieden voneinander sind und Wasserstoff, eine substituierte oder unsubstituierte, geradkettige oder verzweigte Alkylgruppe, eine substituierte oder unsubstituierte, geradkettige oder verzweigte Alkenylgruppe, eine substituierte oder unsubstituierte, geradkettige oder verzweigte Alkinylgruppe, eine substituierte oder unsubstituierte cycloaliphatische Gruppe, eine substituierte oder unsubstituierte aromatische Gruppe, eine substituierte oder unsubstituierte heterozyklische Gruppe, eine substituierte oder unsubstituierte Alkoxygruppe, eine substituierte oder unsubstituierte Alkoxycarbonylgruppe, eine substituierte oder unsubstituierte Carboxylgruppe oder eine substituierte oder unsubstituierte Alkylamidgruppe bedeuten.

Besonders bevorzugt wird der Beschichtungszusammensetzung als Gleitmittel ein Carbonsäureamid gemäß der allgemeinen Formel (I) und/oder eines Salzes hiervon zugesetzt, worin R₁ eine substituierte oder unsubstituierte, geradkettige oder verzweigte C₁₋₂₅-Alkylgruppe, eine substituierte oder unsubstituierte, geradkettige oder verzweigte C₁₋₂₅-Alkyenylgruppe, eine substituierte oder unsubstituierte, geradkettige oder verzweigte C₁₋₂₅-Alkyinylgruppe, eine substituierte oder unsubstituierte C₆₋₂₀-cycloaliphatische Gruppe, eine substituierte oder unsubstituierte C₆₋₂₀-aromatische Gruppe, eine substituierte oder unsubstituierte C₁₋₂₀-heterozyklische Gruppe, eine substituierte oder unsubstituierte C₁₋₂₅-Alkoxygruppe, eine substituierte oder unsubstituierte C₁₋₂₅-Alkoxycarbonylgruppe, eine substituierte oder unsubstituierte Carboxylgruppe oder eine substituierte oder unsubstituierte Alkylamidgruppe ist und R₂ und R₃ gleich oder verschieden voneinander sind und Wasserstoff, eine substituierte oder unsubstituierte, geradkettige oder verzweigte C₁₋₂₀-Alkylgruppe, eine substituierte oder unsubstituierte, geradkettige oder verzweigte C₁₋₂₀-Alkyenylgruppe, eine substituierte oder unsubstituierte, geradkettige oder verzweigte C₁₋₂₀-Alkyinylgruppe, eine substituierte oder unsubstituierte C₆₋₂₀-cycloaliphatische Gruppe, eine substituierte oder unsubstituierte C₆₋₂₀-aromatische Gruppe, eine substituierte oder unsubstituierte C₁₋₂₀-heterozyklische Gruppe, eine substituierte oder unsubstituierte C₁₋₂₀-Alkoxygruppe, eine substituierte oder unsubstituierte C₁₋₂₀-Alkoxycarbonylgruppe, eine substituierte oder unsubstituierte Carboxylgruppe oder eine substituierte oder unsubstituierte Alkylamidgruppe bedeuten.

Gute Ergebnisse im Hinblick auf eine geringe Klebrigkeit der Beschichtungszusammensetzung werden insbesondere erhalten, wenn der Beschichtungszusammensetzung als Gleitmittel ein Carbonsäureamid gemäß der allgemeinen Formel (I) und/oder eines Salzes hiervon zugesetzt wird, worin R₁ eine geradkettige oder verzweigte C₁₋₂₅-Alkylgruppe, eine geradkettige oder verzweigte C₁₋₂₅-Alkyenylgruppe, eine geradkettige oder verzweigte C₁₋₂₅-Alkyinylgruppe, eine C6-20-cycloaliphatische Gruppe oder eine C₆₋₂₀₋aromatische Gruppe ist und R₂ und R₃ gleich oder verschieden voneinander sind und Wasserstoff, eine geradkettige oder verzweigte C₁₋₂₅-Alkylgruppe, eine geradkettige oder verzweigte C₁₋₂₅-Alkyenylgruppe, eine geradkettige oder verzweigte C₁₋₂₅-Alkyinylgruppe, eine C₆₋₂₀-cycloaliphatische Gruppe oder eine C₆₋₂₀-aromatische Gruppe bedeuten.

Um eine besonders geringe Klebrigkeit der Beschichtungszusammensetzung zu erreichen, wird es in Weiterbildung der Erfindung vorgeschlagen, der Beschichtungszusammensetzung als Gleitmittel ein Carbonsäureamid gemäß der allgemeinen Formel (I) und/oder eines Salzes hiervon zuzusetzen, worin R₁ eine C₁₀₋₂₄-Alkylgruppe und R₂ und R₃ gleich oder verschieden voneinander sind und Wasserstoff oder eine substituierte oder unsubstituierte Alkylamidgruppe bedeuten.

Besonders bevorzugt enthält die Beschichtungszusammensetzung als Gleitmittel ein Carbonsäureamid gemäß der allgemeinen Formel (I) und/oder eines Salzes hiervon, worin R₁ eine C₁₀₋₂₄-Alkylgruppe und bevorzugt eine C₁₅₋₂₀-Alkylgruppe ist und R₂ eine substituierte oder unsubstituierte Alkylamidgruppe bedeutet und R₃ ein Wasserstoff bedeutet.

Ein ganz besonders bevorzugtes Beispiel für ein geeignetes Gleitmittel sind sekundäre Amide und höchst bevorzugt Octadecanamid und dessen Salze.

Es sind aber auch zusätzliche Gleitmittel möglich, so z.B. insbesondere Metallseifen, Komplexester und Fettalkohole. Metallseifen sind gemäß der vorliegenden Erfindung Salze von Fettsäuren sowie Salze von Harz- und Naphthensäuren mit Metallen.

Bevorzugt sind Meallseifen von C2 bis C30 Mono- und/oder Dicarbonsäuren, bevorzugt C12 bis C20 Mono- und/oder Dicarbonsäuren, insbesondere bevorzugt Stearinsäure, Sebacinsäure, Adipinsäure und Azelainsäure oder Mischungen davon. Es sind auch substituierte Mono- und/oder Dicarbonsäurederivate, insbesondere Stearinsäurederivate und/oder Sebacinsäurederivate möglich. Besonders bevorzugt sind Mono- und/oder Dicarbonsäuren insbesondere ausgewählt aus der Gruppe bestehend aus:
Hydroxystearinsäuren und/oder Hydroxystearinsäurederivaten, Hydroxysebacinsäuren und/oder Hydroxysebacinsäurederivaten, insbesondere aus 12-Hydroxystearinsäure.

Die Kationen der Metallseifen sind bevorzugt aus der Gruppe bestehend aus: Li, Na, K, Ca, Ba, Al und/oder Zn, insbesondere bevorzugt aus der Gruppe bestehend aus Zn, Li, Na, K und Ca. Eine ganz besondes bevorzugte Metallseife ist das Zinkstearat.

Ebenso bevorzugt sind Kalium- und/oder Natriumsalze von Terpensäuren oder von Naphthensäuren mit Metallen.

Sofern die Metallseife zwei verschiedene Metallionen, wie beispielsweise Natrium- und Kaliumionen enthält, werden diese auch als gemischte Metallseifen bezeichnet.

Unter Komplexester wird gemäß der vorliegenden Erfindung ein Umsetzungsprodukt von Polyolen und Monocarbonsäuren und Dicarbonsäuren, ein Umsetzungsprodukt von Polyolen und Monoalkoholen und Dicarbonsäuren oder ein Umsetzungsprodukt von Polyolen und Monoalkoholen und Monocarbonsäuren und Dicarbonsäuren verstanden.

Geeignete Beispiele für Komplexester umfassen Umsetzungsprodukte von Polyolen und C₁₋₂₀-Monocarbonsäuren und C₁₋₂₀-Dicarbonsäuren, bevorzugt Umsetzungsprodukte von Polyolen und C₁₋₂₅-Monocarbonsäuren und C₁₋₂₅-Dicarbonsäuren und besonders bevorzugt Umsetzungsprodukte von Polyolen und C₅₋₂₅-Monocarbonsäuren und C₅₋₂₅-Dicarbonsäuren. Bevorzugte Polyole sind Pentaerythrit, Glycerin, Propylenglykol, Ethylenglykol, Xylitol, Polyetherpolyole und dergleichen. Besonders bevorzugte Komplexester sind Neopolyolester.

Bei den Fettalkoholen handelt es sich erfindungsgemäß um aliphatische, langkettige einwertige Alkohole. Die Kohlenwasserstoffreste sind bei nativen Fettalkoholen oft unverzweigt, synthetische Fettalkohole können auch verzweigt sein. Fettalkohole mit 6 bis 22 Kohlenstoffatome sind erfindungsgemäß bevorzugt. Besonders bevorzugt sind Stearylalkohol (1-Octadecanol) und Cetylalkohol (1-Hexadecanol).

Gemäß der vorliegenden Erfindung ist ein Wachs definiert als ein Stoff, der bei 20°C knetbar, fest bis brüchig-hart ist, eine grobe bis feinkristalline Struktur aufweist, farblich durchscheinend bis opak, aber nicht glasartig ist, über 40 °C ohne Zersetzung schmilzt, wenig oberhalb des Schmelzpunktes leicht flüssig (d.h. verhältnismäßig niedrigviskos) ist, eine stark temperaturabhängige Konsistenz und Löslichkeit aufweist sowie unter leichtem Druck polierbar ist.

Die Wachse sind erfindungsgemäß bevorzugt ausgewählt aus der Gruppe bestehend aus: Polyolefinwachs (insbesondere Polyethylenwachs), Paraffine, Fischer-Tropsch-Wachse, Montanwachsem/Esterwachse, Amidwachse, natürliche Wachse und PTFE (Polytetrafluorethylen) oder Mischungen davon. Diese Gruppen von Verbindungen sind dem Fachmann bestens vertraut.

Besonders bevorzugt sich Polyolelfinewachse, insbesondere Polyethylenwachse. Polyethylenwachse (PE-Wachse) entstehen durch Polymerisation des gasförmigen Stoffes Ethylen oder durch thermischen Abbau hochmolekularer Kunststoffe.

Insbesondere ist bevorzugt, dass das mindestens eine Wachs ein Polyolefinwachs, besonders bevorzugt ein Polyethylenwachs und ganz besonders bevorzugt ein Polyethylenwachs mit einem gewichtsgemittelten Molekulargewicht von 500 bis 2,000 g/mol ist. Ferner ist es bevorzugt, in der Beschichtungszusammensetzung ein entsprechendes Wachs mit einem geringen Restmonomerengehalt vorzusehen, nämlich bevorzugt ein Wachs mit einem entsprechenden Restmonomerengehalt von weniger als 1.000 ppm, weiter bevorzugt von weniger als 100 ppm und ganz besonders bevorzugt von nicht mehr als 10 ppm. Dies trägt zu einer Vermeidung der Emission unerwünschter Stoffe und von Geruchsbelästigungen bei.

Vorzugsweise beträgt der Anteil des Gleitmittels in der Beschichtungszusammensetzung 0,025 bis 10 Gew.-%. Geringere Mengen an Gleitmittel führen zu einer unzureichenden Verringerung der Klebrigkeit der Beschichtungszusammensetzung, wohingegen höhere Mengen keine weitere Verringerung der Klebrigkeit bewirken, aber die anwendungstechnischen Eigenschaften der Beschichtungszusammensetzung beeinträchtigen. Im Hinblick hierauf ist es ferner bevorzugt, dass der Anteil des Gleitmittels in der Beschichtungszusammensetzung 0,05 bis 5 Gew.-%, weiter bevorzugt 0,1 bis 2 Gew.-% und ganz besonders bevorzugt 0,2 bis 1.5 Gew.-% beträgt. Erfindungsgemäß enthält die Beschichtungszusammensetzung 15 bis 80 Gew.-% mindestens eines Ethylenvinylacetat-Copolymers. Der Zusatz des Ethylenvinylacetat-Copolymers trägt maßgeblich zu einer geeigneten Viskosität der Beschichtungszusammensetzung sowie in Kombination mit dem Gleitmittel, dem Kohlenwasserstoffharz und dem Wachs zu einer Verringerung des Curling des damit beschichteten Substrats bei.

Gute Ergebnisse werden in dieser Hinsicht insbesondere erhalten, wenn das mindestens eine Ethylvinylacetat-Copolymer der Beschichtungszusammensetzung ein Copolymer ist, das außer den Comonomeren Ethen und Vinylacetat kein weiteres Comonomer enthält. Ferner ist es bevorzugt, dass Beschichtungszusammensetzung einen geringen Restmonomerengehalt an Ethylen und Vinylacetat aufweist, nämlich bevorzugt einen entsprechenden Restmonomerengehalt von weniger als 1.000 ppm, weiter bevorzugt von weniger als 100 ppm und ganz besonders bevorzugt von nicht mehr als 10 ppm. Dies trägt zu einer Vermeidung der Emission unerwünschter Stoffe und von Geruchsbelästigungen bei.

In Weiterbildung der Erfindung wird es vorgeschlagen, dass mindestens eine Ethylvinylacetat-Copolymer ein statistisches Copolymer ist, und zwar ganz besonders bevorzugt ein statistisches Copolymer, das außer den Comonomeren Ethen und Vinylacetat kein weiteres Comonomer enthält. Solche Ethylvinylacetat-Copolymere haben sich im Hinblick auf eine Vermeidung von Curling und der Einstellung einer geeigneten Viskosität der Beschichtungszusammensetzung als besonders geeignet erwiesen.

Überraschenderweise hat es sich im Rahmen der vorliegenden Erfindung gezeigt, dass der Anteil des Vinylacetats in dem mindestens einen Ethylvinylacetat-Copolymer nicht nur die Viskosität der Beschichtungszusammensetzung, sondern auch das Ausmaß von Curling des damit beschichteten Substrats beeinflusst. Im Hinblick darauf hat es sich als vorteilhaft erwiesen, dass der Anteil des Vinylacetats in dem mindestens einen Ethylvinylacetat-Copolymer der Beschichtungszusammensetzung im Bereich von 15 bis 80 Gew.-%, weiter bevorzugt im Bereich von mehr als 18 bis 60 Gew.-%, besonders bevorzugt im Bereich von 20 bis 50 Gew.-% und ganz besonders bevorzugt im Bereich von 25 bis 40 Gew.-% liegt.

Gemäß einer weiteren besonders bevorzugten Ausführungsform der vorliegenden Erfindung enthält die Beschichtungszusammensetzung mindestens eine Ethylvinylacetat-Copolymer mit einem bei 190°C und mit einem Prüfgewicht von 2,16 kg gemessenen Schmelzindex von 10 bis 500 g/10 min, bevorzugt von 15 bis 150 g/10 min und besonders bevorzugt von 20 bis 50 g/10 min. Derartige Ethylvinylacetat-Copolymere sind ausreichend hochmolekular, so dass eine Emission dieser aus der Beschichtungszusammensetzung auch nach langer Zeit zuverlässig vermieden wird, und eignen sich hervorragend zur Einstellung einer optimalen Viskosität der Beschichtungszusammensetzung.

Erfindungsgemäß beträgt der Anteil des mindestens einen Ethylenvinylacetat-Copolymers in der Beschichtungszusammensetzung 15 bis 80 Gew.-%. Geringere Mengen an Ethylenvinylacetat-Copolymer führen zu einer unzureichenden Einstellung der Viskosität und zu einer unzureichenden Verringerung des Curlings, wohingegen höhere Mengen keine weiteren diesbezüglichen Vorteile bewirken, aber die anwendungstechnischen Eigenschaften der Beschichtungszusammensetzung beeinträchtigen. Im Hinblick hierauf ist es bevorzugt, dass der Anteil des mindestens einen Ethylvinylacetat-Copolymers in der Beschichtungszusammensetzung 18 bis 60 Gew.-%, besonders bevorzugt 20 bis 50 Gew.-% und ganz besonders bevorzugt 25 bis 40 Gew. % beträgt.

Erfindungsgemäß enthält die Beschichtungszusammensetzung 0,1 bis 30 Gew.-% mindestens eines Kohlenwasserstoffharzes. Der Zusatz des Kohlenwasserstoffharzes trägt maßgeblich zu einer geeigneten Viskosität der Beschichtungszusammensetzung sowie in Kombination mit dem Gleitmittel, dem Ethylenvinylacetat-Copolymer und dem Wachs zu einer Verringerung des Curling des damit beschichteten Substrats bei. Ferner ist das Kohlenwasserstoffharz für die Einstellung einer geeigneten Härte, Wärmebeständigkeit, Blockneigung und eines geeigneten Erweichungspunktes wichtig.

Gute Ergebnisse werden in dieser Hinsicht insbesondere erhalten, wenn in der Beschichtungszusammensetzung mindestens ein Harz eingesetzt wird, welches aus der Gruppe ausgewählt ist, die aus aliphatischen Harzen, cycloaliphatischen Harzen, aromatischen Harzen und beliebigen Mischungen aus zwei oder mehr der vorgenannten Verbindungen besteht. Ferner ist es bevorzugt, in der Beschichtungszusammensetzung ein entsprechendes Harz mit einem geringen Restmonomerengehalt vorzusehen, nämlich bevorzugt ein Harz mit einem entsprechenden Restmonomerengehalt von weniger als 1.000 ppm, weiter bevorzugt von weniger als 100 ppm und ganz besonders bevorzugt von nicht mehr als 10 ppm. Dies trägt zu einer Vermeidung der Emission unerwünschter Stoffe und von Geruchsbelästigungen bei.

In Weiterbildung der Erfindung wird es vorgeschlagen, dass in der Beschichtungszusammensetzung mindestens ein aus der aus aliphatischen Harzen, cycloaliphatischen Harzen, Polystyrolharzen, Polymethylstyrolharzen und beliebigen Mischungen aus zwei oder mehr der vorgenannten Verbindungen bestehenden Gruppe ausgewähltes Harz, bevorzugt ein cycloaliphatisches Harz, ein Inden-Cumaron-Harz und/oder ein Polymethylstyrolharz, besonders bevorzugt ein Dicyclopentadienharz und/oder ein Poly-alpha-methylstyrolharz und ganz besonders bevorzugt ein Dicyclopentadienharz oder ein Inden-Cumaron-Harz mit einem gewichtsgemittelten Molekulargewicht von 200 bis 1,000 g/mol und/oder ein Poly-alpha-methylstyrolharz mit einem gewichtsgemittelten Molekulargewicht von 500 bis 2,000 g/mol enthalten ist. Solche Harze haben sich im Hinblick auf eine Vermeidung von Curling und der Einstellung einer geeigneten Viskosität der Beschichtungszusammensetzung als besonders geeignet erwiesen

Erfindungsgemäß beträgt der Anteil des mindestens einen Kohlenwasserstoffharzes in der Beschichtungszusammensetzung 0,1 bis 30 Gew.-%. Geringere Mengen an Kohlenwasserstoffharz führen zu einer unzureichenden Wirkung des Kohlenwasserstoffharzes, wohingegen höhere Mengen keine weiteren diesbezüglichen Vorteile bewirken, aber die anwendungstechnischen Eigenschaften der Beschichtungszusammensetzung beeinträchtigen. Im Hinblick hierauf ist es bevorzugt, dass der Anteil des mindestens einen Kohlenwasserstoffharzes in der Beschichtungszusammensetzung 1 bis 20 Gew.-%, weiter bevorzugt 2 bis 15 Gew.-% und besonders bevorzugt 5 bis 13 Gew.-% beträgt.

Erfindungsgemäß enthält die Beschichtungszusammensetzung 0,1 bis 20 Gew.-% mindestens eines Wachses. Der Zusatz des Wachses trägt zu der Einstellung einer geeigneten Viskosität der Beschichtungszusammensetzung bei und steuert die "offene Zeit", welche ein wichtiger Faktor im Beschichtungsprozess ist. Ferner ist das Wachs für die Einstellung einer geeigneten Härte, Wärmebeständigkeit, Blockneigung und eines geeigneten Erweichungspunktes wichtig. Vorzugsweise ist die Menge des Wachses geringer als die Menge des Kohlenwasserstoffharzes.

Gute Ergebnisse werden insbesondere erhalten, wenn das mindestens eine in der Beschichtungszusammensetzung enthaltene Wachs ein Kohlenwasserstoffwachs und besonders bevorzugt ein gesättigtes Kohlenwasserstoffwachs ist.

Erfindungsgemäß beträgt der Anteil des mindestens einen Wachses in der Beschichtungszusammensetzung 0,1 bis 20 Gew.-%. Geringere Mengen an Wachs führen zu einer unzureichenden Wirkung des Wachses, wohingegen höhere Mengen keine weiteren diesbezüglichen Vorteile bewirken, aber die anwendungstechnischen Eigenschaften der Beschichtungszusammensetzung beeinträchtigen. Im Hinblick hierauf ist es bevorzugt, dass der Anteil des mindestens einen Wachses in der Beschichtungszusammensetzung 0,5 bis 15 Gew.-%, besonders bevorzugt 1 bis 10 Gew.-% und ganz besonders bevorzugt 2 bis 8 Gew.-% beträgt.

Erfindungsgemäß enthält die Beschichtungszusammensetzung 0,1 bis 80 Gew.-% wenigstens eines Füllstoffes. Durch den Zusatz des Füllstoffes wird die Brennbarkeit der Beschichtungszusammensetzung auch ohne Zusatz spezieller Flammschutzmittel reduziert. Eine erhöhte Menge an Füllstoff fördert zudem den Wärmetransport der Beschichtungszusammensetzung, dies ist nicht nur für den Beschichtungsprozess, sondern auch für den Druck-, Schäum- und Prägeprozess wichtig. Zudem sind Füllstoffe schwer flüchtig, so dass deren Zusatz zu einer Verringerung bzw. Vermeidung der Emission unerwünschter Stoffe und von Geruchsbelästigungen der Beschichtungszusammensetzung beiträgt.

Gute Ergebnisse werden in diesem Hinblick insbesondere erzielt, wenn die Beschichtungszusammensetzung als Füllstoff mindestens einen anorganischen Füllstoff enthält.

Vorzugsweise ist der anorganische Füllstoff aus der Gruppe ausgewählt, die aus Calciumcarbonat, Mischungen aus Calciumcarbonat und Magnesiumcarbonat, Aluminiumhydroxid, Bariumsulfat und beliebigen Mischungen aus zwei oder mehr der vorgenannten Verbindungen besteht. Besonders bevorzugt enthält die Beschichtungszusammensetzung als Füllstoff Calciumcarbonat oder eine Mischung aus Calciumcarbonat und Magnesiumcarbonat, insbesondere in Form von Dolomit.

Es kann außerdem vorteilhaft sein, dass die Beschichtungszusammensetzung neben eines oder mehrerer anorganischer Füllstoffe bereits expandierte Mikrohohlkugeln als Füllstoff enthält. Diese organischen Füllstoffe, werden auch als Leichtfüllstoffe bezeichnet und können insbesondere zur Verringerung des spezifischen Gewichtes der Füllstoffe bzw. zur Erhöhung des spezifischen Volumens eingesetzt werden. Besonders vorteilhaft sind dabei expandierte Polymerhohlkugeln.

Ohne an eine wissenschaftliche Theorie gebunden zu sein, scheint das sehr hohe spezifische Volumen dieser anorganisch-organischen Füllstoffe, durch die Wechselwirkung zwischen dem Polymermaterial und den anorganischen Füllstoffen erreicht zu werden.

Erfindungsgemäß beträgt der Anteil des mindestens einen Füllstoffes in der Beschichtungszusammensetzung 0,1 bis 80 Gew.-%. Geringere Mengen an Füllstoff führen zu einer unzureichenden Bewirkung der vorgenannten Effekte, wohingegen höhere Mengen keine weiteren diesbezüglichen Vorteile bewirken, aber die anwendungstechnischen Eigenschaften der Beschichtungszusammensetzung beeinträchtigen. Im Hinblick hierauf ist es bevorzugt, dass der Anteil des mindestens einen Füllstoffes in der Beschichtungszusammensetzung 10 bis 80 Gew.-%, bevorzugt 20 bis 70 Gew.-%, besonders bevorzugt 30 bis 60 Gew.-% und ganz besonders bevorzugt 40 bis 55 Gew.-% beträgt.

In Weiterbildung der Erfindung wird es vorgeschlagen, dass die Summe der Anteile des Ethylvinylacetat-Copolymers und des Füllstoffs in der Beschichtungszusammensetzung 25 bis 99 Gew.-%, weiter bevorzugt 40 bis 98 Gew. %, besonders bevorzugt 60 bis 97 Gew. % und ganz besonders bevorzugt 70 bis 96 Gew. % beträgt.

Vorzugsweise liegt das Gewichtsverhältnis von Ethylenvinylacetat-Copolymeren der Komponente a) und Füllstoff im Bereich von 80 : 20 bis 10 :90, bevorzugt von 70 : 30 bis 20 : 80, insbesondere von 60 : 40 bis 30 : 70.

Insbesondere zur Herstellung einer Schaumstrukturtapete ist es gemäß einer weiteren besonders bevorzugten Ausführungsform der vorliegenden Erfindung vorgesehen, dass die Beschichtungszusammensetzung zusätzlich zu den zuvor beschriebenen Komponenten a) bis e) ferner als Komponente f) mindestens ein Treibmittel enthält. Grundsätzlich kann im Rahmen der vorliegenden Erfindung jedes Treibmittel eingesetzt werden, wobei insbesondere mit Treibmitteln gute Ergebnisse erzielt werden, welche aus der Gruppe ausgewählt sind, die aus Mikrohohlkugeln, Metallcarbonaten, Azodicarbonamid, Oxybisbenzolsulfonylhydrazid, C3-10-Alkanen und/oder Mischungen aus zwei oder mehr der vorgenannten Verbindungen besteht.

Vorzugsweise enthält die Beschichtungszusammensetzung Mikrohohlkugeln, die mit einen C3-10-Alkan, bevorzugt mit einem C3-8-Alkan und besonders bevorzugt mit Isooctan als Treibmittel befüllt sind. Die Mikrohohlkugeln bzw. Mikrokapseln, die als Treibmittel verwendet werden, expandieren erst kurz vor der Heißprägeeinrichtung.

Die Menge des Treibmittels in der Beschichtungszusammensetzung ist je nach gewünschtem Schäumungsgrad einzustellen. Insbesondere hat es sich als vorteilhaft erwiesen, dass der Anteil des Treibmittels in der Beschichtungszusammensetzung 0,1 bis 20 Gew.-%, besonders bevorzugt 0,25 bis 10 Gew.-% und ganz besonders bevorzugt 0,5 bis 5 Gew.-%, wie insbesondere 2 bis 4 Gew.-(, wie ungefähr 2 Gew.-%, beträgt. Hierdurch wird ein optimales Verhältnis aus erreichbarer Schaumhöhe und notwendiger mechanischer Festigkeit erhalten.

Ferner ist es gemäß einer weiteren Ausführungsform der vorliegenden Erfindung vorgesehen, dass die Beschichtungszusammensetzung zusätzlich zu den zuvor beschriebenen Komponenten a) bis e) und ggf. der Komponente f) ferner als Komponente g) 0,05 bis 2 Gew.-% mindestens eines Antioxidationsmittels enthält.

Geeignete Antioxidationsmittel sind dem Fachmann bestens bekannt. Vorzugsweise können Antioxidationsmittel verwendet werden, die eine geringe Flüchtigkeit aufweisen und so zu einer weiteren Verringerung ungewollter Emissionen führen. Insbesondere werden hierbei aminfreie Antioxidationsmittel eingesetzt. Daher sind die Antioxidationsmittel vorzugsweise ausgewählt aus der Gruppe bestehend aus sterisch gehinderten Phenolen, Lactonen, wie insbesondere Benzofuran-2-on-derivaten, sterisch gehinderten Phosphiten oder Mischungen daraus.

Beispiele für sterisch gehinderte Phenole sind Pentaerythritol tetrakis(3-(3,5-di-tert-butyl-4-hydroxyphenyl)propionat, Octadecyl-3-(3,5-di-t-butyl-4-hydroxyphenylpropionat), 3,5-Bis-(1,1-dimethylethyl-4-hydroxy-C7-C9-alkylverzweigte Ester, Ethylen(bisoxyethylen)bis-(3-(5-t-butylhydroxy-4-tolyl)-propionat).

Beispiele für Lactone, insbesondere Benzofuran-2-on-derivate sind beschrieben in EP 1291384 und DE 19618786.

Sterisch gehinderte Phosphite, wie Tris(2,4-di-t-butylphenyl)phosphit werden beispielsweise beschrieben in EP 905180.

Ferner kann die Beschichtungszusammensetzung je nach Anwendungsfall als Komponente h) 0 bis 30 Gew.-% mindestens eines Additivs enthalten, wie beispielsweise ein Flammschutzmittel und/oder Färbemittel, wie Titandioxid.

Gemäß einer ersten ganz besonders bevorzugten Ausführungsform der vorliegenden Erfindung enthält die Beschichtungszusammensetzung:
a) 20 bis 50 Gew.-% eines statistischen Ethylvinylacetat-Copolymers, das außer den Comonomeren Ethen und Vinylacetat kein weiteres Comonomer enthält,
b) 1 bis 20 Gew.-% eines aus der aus aliphatischen Harzen, cycloaliphatischen Harzen, Inden-Cumaron-Harzen, Polystyrolharzen, Polymethylstyrolharzen und beliebigen Mischungen aus zwei oder mehr der vorgenannten Verbindungen bestehenden Gruppe ausgewähltes Kohlenwasserstoffharzes,
c) 1 bis 15 Gew.-% mindestens eines Polyolefinwachses,
d) 20 bis 70 Gew.-% eines aus der aus Calciumcarbonat, Mischungen aus Calciumcarbonat und Magnesiumcarbonat, Aluminiumhydroxid, Bariumsulfat und beliebigen Mischungen aus zwei oder mehr der vorgenannten Verbindungen bestehenden Gruppe ausgewählten Füllstoffes und
e) 0,05 bis 5 Gew.-% eines Carbonsäureamids gemäß der allgemeinen Formel (I) und/oder eines Salzes hiervon ist, worin R₁ eine C₁₀₋₂₄-Alkylgruppe ist und R₂ und R₃ gleich oder verschieden voneinander sind und Wasserstoff oder eine substituierte oder unsubstituierte Alkylamidgruppe bedeuten,
wobei die Summe aller Bestandteile 100 Gew.-% beträgt.

Gemäß einer zweiten ganz besonders bevorzugten Ausführungsform der vorliegenden Erfindung enthält die Beschichtungszusammensetzung:
a) 25 bis 40 Gew.-% eines das statistischen Ethylvinylacetat-Copolymers, das außer den Comonomeren Ethen und Vinylacetat kein weiteres Comonomer enthält, wobei der Anteil des Vinylacetats in dem Ethylvinylacetat-Copolymer im Bereich von mehr als 18 bis 60 Gew.-% liegt und das Ethylvinylacetat-Copolymer einen bei 190°C und mit einem Gewicht von 2,16 kg gemessenen Schmelzindex von 15 bis 150 g/10 min aufweist,
b) 2 bis 15 Gew.-% eines Dicyclopentadienharzes vorzugsweise mit einem gewichtsgemittelten Molekulargewicht von 200 bis 1,000 g/mol und/oder eines Poly-alpha-methylstyrolharzes vorzugsweise mit einem gewichtsgemittelten Molekulargewicht von 500 bis 2,000 g/mol,
c) 1 bis 10 Gew.-% eines Polyethylenwachs vorzugsweise mit einem gewichtsgemittelten Molekulargewicht von 500 bis 2,000 g/mol,
d) 30 bis 60 Gew.-% Calciumcarbonat oder einer Mischung aus Calciumcarbonat und Magnesiumcarbonat, bevorzugt Dolomit, und
e) 0,1 bis 2 Gew.-% eines Carbonsäureamids gemäß der allgemeinen Formel (I) und/oder eines Salzes hiervon ist, worin R₁ eine C₁₅₋₂₀-Alkylgruppe ist und R₂ eine substituierte oder unsubstituierte Alkylamidgruppe bedeutet und R₃ Wasserstoff bedeutet,
wobei die Summe aller Bestandteile 100 Gew.-% beträgt.

Bei den beiden zuvor genannten ganz besonders bevorzugten Ausführungsformen der vorliegenden Erfindung kann die Beschichtungszusammensetzung zusätzlich als Komponente f) 0,05 bis 5 Gew.-% eines Treibmittel enthalten, welches bevorzugt aus der Gruppe ausgewählt ist, die aus Mikrohohlkugeln, Metallcarbonaten, Azodicarbonamid, Oxybisbenzolsulfonylhydrazid, C3-10-Alkanen und/oder Mischungen aus zwei oder mehr der vorgenannten Verbindungen besteht.

Wie weiter vorstehend beschrieben, ist es ein besonderer Vorteil der vorliegenden Erfindung, dass der Beschichtungszusammensetzung kein chlorhaltiges Polymer zugegeben werden muss, um die gewünschten Eigenschaften zu erhalten. Daher ist es gemäß der vorliegenden Erfindung besonders bevorzugt, dass die Beschichtungszusammensetzung kein chlorhaltiges Polymer enthält.

In Weiterbildung der Erfindung wird es vorgeschlagen, dass die Beschichtungszusammensetzung neben den zuvor beschriebenen Komponenten a) bis h) keine weitere Verbindung(en) enthält, also die Beschichtungszusammensetzung aus den Komponenten a) bis e), ggf. f), ggf. g) und ggf. h) besteht.

Ein weiterer Gegenstand der vorliegenden Erfindung ist ein beschichtetes Substrat und insbesondere eine beschichtete Wand-, Boden und Deckenbekleidung, welche(s) ein bahnförmiges Substrat umfasst, das zumindest abschnittsweise auf zumindest einer seiner beiden Seiten mit einer zuvor beschriebenen Beschichtungszusammensetzung beschichtet ist. Vorzugsweise ist das bahnförmige Substrat auf einer seiner beiden Seite vollflächig mit der zuvor beschriebenen Beschichtungszusammensetzung beschichtet.

Die vorliegende Erfindung eignet sich insbesondere für beschichtete Substrate, wobei das Substrat aus der aus Holz, Holzbestandteilen, Holzwerkstoffen, Papieren, Kunststoffen, organische Fasern, synthetische Fasern, mineralische Verbindungen, Metallen, textile Flächengebilden und Kombinationen von zwei oder mehr der vorgenannten Substraten bestehenden Gruppe ausgewählt ist.

Vorzugsweise handelt es sich bei dem Substrat des beschichteten Substrats um ein textiles Flächengebilde oder ein Papier und vorzugsweise um einen Vliesstoff.

Des Weiteren betrifft die vorliegende Erfindung ein Verfahren zur Herstellung eines beschichteten Substrats und insbesondere einer beschichteten Wand-, Boden und Deckenbekleidung, wobei dieses folgende Verfahrensschritte umfasst:
i. Bereitstellen eines bahnförmigen Substrats und vorzugsweise einer Tapete,
ii. Bereitstellen einer zuvor beschriebenen Beschichtungszusammensetzung,
iii. Aufbringen der Beschichtungszusammensetzung auf zumindest einen Abschnitt mindestens einer Seite des Substrats und vorzugsweise vollflächig auf eine der beiden Seiten des Substrats,
iv. Aushärten, Verfestigen und/oder Erkalten der Beschichtungszusammensetzung,
v. optional Bedrucken der Beschichtungszusammensetzung
vi. optional Heißverformung der Beschichtungszusammensetzung,
vii. optional laminieren/kaschieren einer dünnen Folie

Ein besonderer Vorteil der erfindungsgemäßen Beschichtungszusammensetzung ist es, dass diese mit allen gängigen Druckfarben und Drucktechniken bedruckt werden kann. Daher kann die Beschichtungszusammensetzung insbesondere mit wässrigen Druckfarben, bevorzugt mit einem Druckverfahren ausgewählt aus Tief-, Flexo-, Inkjet- oder Siebdruckverfahren, auf das beschichtete Substrat bedruckt werden.

Insbesondere kann bei dem Verfahren zur Herstellung des beschichteten Substrats das bedruckte Substrat heißverformt werden.

Zur Aufbringung der Beschichtungszusammensetzungen auf ein bahnförmiges Substrat kann es vorteilhaft sein die Beschichtungszusammensetzung im Bereich von 50 bis 200 °C, bevorzugt von 60 bis 180 °C zu erwärmen. Die Einstellung der Temperatur ermöglicht eine geeignete Beschichtungsviskosität und kann die Verarbeitbarkeit der Beschichtungszusammensetzungen erleichtern.

Schließlich kann das bedruckte Substrat abschließend mit einer Schutzschicht und/oder mit einer dünnen Folie überzogen werden.

Die Beschichtungszusammensetzungen werden bevorzugt zur Herstellung eines Wandbelags, insbesondere einer Tapete verwendet.

"Dispersion" bezeichnet im Sinne der Erfindung eine heterogene Mischung aus dem mindestens einen Copolymer der Komponente a) und einem Dispergiermedium in dem mindestens ein Copolymer der Komponente a) dispergiert ist. Das Dispergiermedium kann fest oder flüssig sein und ist so auszuwählen, dass sich die zu dispergierende Verbindung nicht in dem Dispergiermedium löst.

Geeignete Dispergiermedien für das mindestens eine Ethylenvinylacetat-Copolymer sind dem Fachmann bekannt und können beispielsweise ausgewählt sein aus Wasser, aliphatischen oder cyclischen Kohlenwasserstoffen, Alkylalkoholen, Glykolen, Alkylendiaminen, wässrigen Salzlösungen, wässrigen Ammoniaklösungen, Wasserstoffperoxid, Formaldehyd, Phosphorsäure, Ameisensäure, Natrium oder Kaliumhydroxid oder wässrigen Lösungen aus Natrium- oder Kaliumhydroxid oder Mischungen daraus.

Die Verwendung von wässrigen Polymerdispersionen während eines Fertigungsprozesses, der bevorzugt einen oder mehrere Trocknungs- oder Erwärmungsschritte umfasst, kann gegenüber der Zugabe von organischen Dispergiermedien bevorzugt sein, da ein vermindertes Gesundheitsrisiko für die Umwelt und den Anwender besteht.

Daher ist das Dispergiermedium in einer bevorzugten Ausführungsform ausgewählt aus der Gruppe bestehend aus Wasser, wässrigen Salzlösungen oder Mischungen daraus. Insbesondere ist das Dispergiermedium Wasser.

Die Copolymere der Komponente a) können daher in einer besonders vorteilhaften Ausführungsform als wässrige Polymerdispersion vorliegen.

Gute Ergebnisse werden insbesondere bei einem Anteil von Wasser im Bereich von 1 bis 90 Gew.-%, bevorzugt von 10 bis 70 Gew.-%, weiter bevorzugt von 15 bis 60 Gew.-%, besonders bevorzugt von 20 bis 50 Gew.-%, insbesondere von 25 bis 45 Gew.-% erhalten.

Vorzugsweise werden die Copolymere der Komponente a) mittels einer Mischvorrichtung, bevorzugt eines Dissolver-Rührers, eines Rotor-Stator-Mischers oder einer vergleichbaren Vorrichtung, die ein kräftiges Dispergieren der Mischung erlauben, dispergiert.

Die zusätzlichen Bestandteile können gegebenenfalls unter Rühren (i.e. eindispergieren) mit dem mindestens einen Copolymer in Kontakt gebracht werden. Die Ausbildung einer Dispersion kann die gleichmäßige Verteilung der einzelnen Bestandteile der Beschichtungszusammensetzung begünstigen und sich somit vorteilhaft auf die Qualität des resultierenden Produkts auswirken.

Solche erfindungsgemäßen Beschichtungszusammensetzung, die wässrige Polymerdispersionen enthalten, weisen zusätzlich den Vorteil auf, dass sie beispielsweise durch einfaches Trocknen oder Eindampfen verfestigt werden können, ohne dass schädliche Abdämpfe entstehen.

Darüber hinaus können Sie leicht verarbeitet werden und weisen besonders günstige Fließeigenschaften auf. Die Erfindung betrifft daher in einer besonders vorteilhaften Ausführungsform Beschichtungszusammensetzungen, deren Copolymere der Komponente a) in einer wässrigen Dispersion vorliegen.

Gute Ergebnisse werden erreicht, wenn mindestens zwei Copolymere der Komponente
a) zur Herstellung der Beschichtungszusammensetzung eingesetzt werden.

Es hat sich zudem gezeigt, dass besonders vorteilhafte Ergebnisse erhalten werden, wenn die Glastemperatur (Tg) der mindestens zwei Copolymere der Komponente a) nicht gleich ist.

"Glastemperatur" (Tg) bezeichnet den Erweichungspunkt bei dem die Kettensegmente des Polymers beweglich werden und Translationsbewegungen ausführen können. Die Glastemperatur eines Polymers oder eines Copolymers wird durch unterschiedliche Faktoren beeinflusst. Ein Faktor ist der Verzweigungsgrad der Polymere oder Copolymere. Im Fall der Copolymere wird die Glastemperatur auch maßgeblich von dem Gewichtsverhältnis der eingesetzten Comonomere beeinflusst.

Hierbei sind insbesondere Beschichtungszusammensetzung bevorzugt, die Copolymere der Komponente a) enthalten, deren Glastemperatur (Tg) im Bereich von -100 bis 200 °C, bevorzugt von -100 bis 100 °C, weiter bevorzugt von -70 bis 100 °C, besonders bevorzugt von -50 bis 20 °C liegt.

Enthalten die erfindungsgemäßen Beschichtungszusammensetzungen mehr als ein Copolymer der Komponente a) beträgt der relative Unterschied der jeweiligen Glastemperaturen mindestens 5 °C, bevorzugt mindestens 10 °C, besonders bevorzugt mindestens 15 °C.

In Weiterbildung der Erfindung wird vorgeschlagen, dass der Feststoffgehalt der mindestens einen Copolymer-Dispersion der Komponente a) maximal 80 Gew.-% beträgt, bevorzugt liegt der Feststoffgehalt im Bereich von 20 bis 70 Gew.-%, besonders bevorzugt im Bereich von 40 bis 60 Gew.-%, insbesondere im Bereich von 45 bis 55 Gew.-%.

Ferner ist es in einer weiteren Ausführungsform der Erfindung vorgesehen, dass das Gewichtsverhältnis von Copolymeren der Komponente a) zu Füllstoff im Bereich von 99:1 Gew.-% bis 50 : 50 Gew.-%, bevorzugt von 95 : 5 Gew.-% bis 60 : 40 Gew.-%, besonders bevorzugt von 90 :10 Gew.-% bis 70 : 30 Gew.-% liegt.

Gegebenenfalls kann es vorteilhaft sein in einer weiteren Ausführungsform der Erfindung ein weiteres Polymer oder Copolymer als Komponente e) den Beschichtungszusammensetzungen zuzusetzen. Diese Polymere oder Copolymere können in einem Dispergiermedium, insbesondere Wasser vorliegen. Diese Polymere oder Copolymere enthalten in einer besonders bevorzugten Ausführungsform mindestens eine Gruppe, welche ausgewählt ist aus der Gruppe bestehend aus Ester, Melamin, Harnstoff, Formaldehyd, Ether, Epoxid, Carbamat, Acrylsäure, Methacrylsäuremethylester oder Mischungen daraus. Hieraus ergeben sich demnach Polymere oder Copolymere wie beispielsweise Polyester, Aminoplaste, Polyether, Polyurethane, Polyacrylate, Polymethylmethacrylate oder Mischungen daraus.

"Polyester" bezeichnet im Sinne der Erfindung Verbindungen die aus Monomeren Bausteinen bestehen, die mindestens eine Ester-Gruppe enthalten. "Ester" sind Stoffgruppen, die aus der Reaktion einer Säure und eines Alkohols unter Abspaltung von Wasser entstehen. Als Säuren können organische Säuren oder anorganische Säuren eingesetzt werden. Beispiele für organische Säuren sind insbesondere Carbonsäuren oder Aminosäuren. Als anorganische Säuren werden beispielsweise Verbindungen wie Phosphorsäure, Schwefelsäure, Borsäure oder Kohlensäure verstanden. "Alkohole" bezeichnen sämtliche Verbindungen die eine oder mehrere Hydroxygruppen (-O-H) besitzen und an aliphatische Kohlenstoffatome gebunden sind.

"Aminoplaste" gehören zu der Gruppe der Kunstharze und werden durch eine mehrfach ablaufende Kondensationsreaktion (i.e. Polykondensation) von Carbonylverbindungen (-C=O(R)) und Verbindungen mit mindestens einer NH-Gruppe erzeugt. Bevorzugt wird Formaldehyd als Carbonylverbindung eingesetzt. Bevorzugte Beispiele für Verbindungen die NH-Gruppen tragen sind Melamin, Harnstoff, oder Dicyandiamid. Daraus ergeben sich beispielsweise für die Aminoplaste Harnstoffharze, Melaminharze oder Dicyandiamidharze.

Der Begriff "Melamin" umfasst dabei neben dem unsubstituierten 2,4,6-Triamino-1,3,5-triazin auch substituiertes 2,4,6-Triamino-1,3,5-triazin.

Mit der Bezeichnung "Polyether" werden Verbindungen beschrieben, die mindestens eine Ethergruppe - ein Sauerstoffatom das zwei Kohlenwasserstoffreste trägt (R-O-R) bezeichnet. Die jeweiligen Kohlenwasserstoffreste können gleich oder verschieden sein und aliphatisch, einfach oder mehrfach ungesättigte Kohlenwasserstoffe enthalten, die kettenförmig oder auch cyclisch sein können. Die Polyether können endständig mindestens ein Epoxid enthalten und werden in diesem Fall auch als "Epoxidharze" bezeichnet.

"Polyurethan" gehört zu der Gruppe der Kunstharze und bezeichnet Verbindungen die aus mehreren Monomeren Bausteinen bestehen, die mindestens eine Carbamat-Gruppe tragen. "Carbamate sind Salze und Ester der Carbamidsäuren (RN-COOH). Die Ester werden auch als "Urethane bezeichnet.

Im Sinne der Erfindung bezeichnet "Polyacrylat" das Polymerisationsprodukt aus mindestens zwei Estern der Acrylsäure (i.e. Acrylsäureester) und/oder der Methacrylsäure.

In Weiterbildung dieses Aspekts der Erfindung kann den erfindungsgemäßen Beschichtungszusammensetzungen optional ein Wachs als Komponente c) zugesetzt werden. Die Wachse sind wie hierin beschrieben definiert. Besonders gute Ergebnisse werden allerdings im Fall der Polyolefinwachse und insbesondere der Polyethylenwachse erhalten, wenn ein Polyethylenwachs mit einem gewichtsgemittelten Molekulargewicht von 2,000 g/mol bis 30,000 g/mol, bevorzugt von 5,000 g/mol bis 20,000 g/mol, besonders bevorzugt von 7,000 g/mol bis 12,000 g/mol zugegeben wird. Ferner können zur Anpassung an praktische Erfordernisse den Beschichtungszusammensetzungen weitere übliche Hilfsstoffen in üblichen Mengen als Komponenten h) und i) zugesetzt werden, die wie hierin beschrieben definiert sind. Enthalten die Beschichtungszusammensetzungen neben den Komponenten a) bis f) die weiteren Hilfsstoffe h) und/oder i) beträgt die Summe der Bestandteile a) bis i) auch in diesem Aspekt 100 Gew.-%.

Weiterhin betrifft die vorliegende Erfindung ein Verfahren zur Herstellung eines beschichteten Substrats und insbesondere einer beschichteten Wand-, Boden und Deckenbekleidung, wobei dieses folgende Verfahrensschritte umfasst:
i. Bereitstellen eines bahnförmigen Substrats und vorzugsweise einer Tapete,
ii. Bereitstellen einer zuvor beschriebenen Beschichtungszusammensetzung, die dadurch gekennzeichnet ist, dass mindestens ein Copolymer der Komponente a) in einem Dispergiermedium vorliegt, welches wie hierin beschrieben definiert ist.
iii. Aufbringen der Beschichtungszusammensetzung auf zumindest einen Abschnitt mindestens einer Seite des Substrats und vorzugsweise vollflächig auf eine der beiden Seiten des Substrats,
iv. Trocknen der Beschichtungszusammensetzung,
v. optional Bedrucken der Beschichtungszusammensetzung
vi. optional Heißverformung der Beschichtungszusammensetzung,
vii. optional laminieren/kaschieren einer dünnen Folie

Die Trocknung der beschriebenen Beschichtungszusammensetzungen kann beispielsweise bei Raumtemperatur durch einfaches Verdampfen des Dispergiermediums erfolgen. Bevorzugt erfolgt die Trocknung der Beschichtungszusammensetzung in der Weise, dass nach der Trocknung eine Restfeuchte von weniger als 10 Gew.-%, bevorzugt von weniger als 5 Gew.-%, insbesondere von weniger als 3 Gew.-% vorliegt.

In einer besonders bevorzugten Ausführungsform dieses Aspekts erfolgt die Trocknung der Beschichtungszusammensetzung in einem Bereich von 80 bis 220 °C, bevorzugt von 90 bis 200 °C, besonders bevorzugt von 95 bis 180 °C.

Der Temperaturbereich der Trocknung ist dabei bevorzugt so einzustellen, dass während der Trocknung noch keine Expansion der Mikrosphären, die als Treibmittel verwendet werden erfolgt.

Bevorzugte Zusammensetzungen können die folgenden Rezepturen aufweisen:

### Beispiel A:

| Verbindungsklasse | Funktion | Glastemperatur (Tg in °C) | Anteil in der Zusammensetzung (Gew.-%) |
|---|---|---|---|
| Copolymerdispersion | Copolymer (A) - (D) | - 50 - +20 | 20- 80 |
| Anorganischer Füllstoff | Füllstoff | | 5 - 40 |
| Mikrosphären / Natriumhydrogencarbonat | Treibmittel | | 5 - 10 |
| Weitere Hilfsstoffe | Entschäumer / Verdicker / Netzmittel / Pigment / Plastifizierungsmittel | | 0,1 - 30 |

### Beispiel B:

| Verbindungsklasse | Funktion | Glastemperatur (Tg in °C) | Anteil in der Zusammensetzung (Gew.-%) |
|---|---|---|---|
| Copolymerdispersion | Copolymer (A) - (D) | -30 - +15 | 30 - 60 |
| Anorganischer Füllstoff | Füllstoff | | 5 - 40 |
| Fischer-Tropsch-Wachs | Wachs | | 0,1 - 10 |
| Mikrosphären | Treibmittel | | 1 - 10 |
| Weitere Hilfsstoffe | Entschäumer / Verdicker / Netzmittel / Pigment / Plastifizierungsmittel | | 0,1 - 30 |

### Beispiel C:

| Verbindungsklasse | Funktion | Glastemperatur (Tg in °C) | Anteil in der Zusammensetzung (Gew.-%) |
|---|---|---|---|
| Acrylatcopolymerdispersion | Copolymer (B) | + 11 | 35 - 40 |
| Ethylen-Vinylacetatcopolymerdispersion | Copolymer (A) | + 3 | 40 - 45 |
| Calciumcarbonat | Füllstoff | | 10 - 15 |
| Mikrosphären | Treibmittel | | 5 - 10 |
| Weitere Hilfsstoffe | Entschäumer / Verdicker / Netzmittel / Plastifiziermittel / Pigment | | 0,1 - 10 |

### Beispiel D:

| Verbindungsklasse | Funktion | Glastemperatur (Tg in °C) | Anteil in der Zusammensetzung (Gew.-%) |
|---|---|---|---|
| Acrylatcopolymerdispersion | Copolymer (B) | + 11 | 35 - 40 |
| Acrylatcopolymerdispersion | Copolymer (B) | - 25 | 40 - 45 |
| Calciumcarbonat | Füllstoff | | 10 - 15 |
| Mikrosphären | Treibmittel | | 5 - 10 |
| Weitere Hilfsstoffe | Entschäumer / Verdicker / Netzmittel / Plastifiziermitte I / Pigment | | 0,1 - 10 |

### Beispiel E:

| Verbindungsklasse | Funktion | Glastemperatur (Tg in °C) | Anteil in der Zusammensetzung (Gew.-%) |
|---|---|---|---|
| Acrylatcopolymerdispersion | Copolymer (B) | + 11 | 70 - 80 |
| Polyvinyl Alkohol | Kohlenwasserstoffharz | | 1 - 5 |
| Dolomit | Anorganischer Füllstoff | | 0,1 - 10 |
| Expandierte Mikrosphären | Organischer Füllstoff | | 0,1 - 5 |
| Mikrosphären | Treibmittel | | 5 - 10 |
| Weitere Hilfsstoffe | Entschäumer / Verdicker / Netzmittel / Plastifiziermittel / Pigment | | 0,1 - 20 |

### Beispiel F:

| Verbindungsklasse | Funktion | Glastemperatur (Tg in °C) | Anteil in der Zusammensetzung (Gew.-%) |
|---|---|---|---|
| Polyvinylacetatcopolymerdispersion | Copolymer (C) | 0 | 0 - 80 |
| Aminoplast | Polymerdispersion | | 2 - 5 |
| Dolomit | Anorganischer Füllstoff | | 0,1 - 10 |
| Expandierte Mikrosphären | Organischer Füllstoff | | 0,1 - 5 |
| Mikrosphären | Treibmittel | | 5 - 10 |
| Weitere Hilfsstoffe | Entschäumer / Verdicker / Netzmittel / Plastifiziermittel / Pigment | | 0,1 - 20 |

Nachfolgend wird die vorliegende Erfindung anhand von zwei diese beschreibenden, aber die Erfindung nicht einschränkenden Beispielen näher erläutert.

### Beispiele

Es wurden drei erfindungsgemäße Beschichtungszusammensetzungen nach den in der untenstehenden Tabelle zusammengefassten Rezepturen zusammengemischt.

| **Komponente** | **Beispiel 1 (Gew.-%)** | **Beispiel 2 (Gew.-%)** | **Beispiel 3 (Gew.-%)** |
|---|---|---|---|
| **EVA** | 40 | 28 | 30 |
| **DCPD-Harz** | 12 | | 8 |
| **Alpha-Methylstyrolharz** | | 8 | |
| **PE-Wachs A** | 3 | | |
| **PE-Wachs B** | | 5 | 3 |
| **Carbonsäureamid** | 0,5 | 0,3 | |
| **Dolomit** | 43,5 | 54,7 | 58 |
| **Treibmittel** | 1 | 4 | 0,0 |
| **Metallseife** | | | 1,0 |

Zu den Rohstoffe ergänzend wie folgt:
EVA: Copolymer aus Ethylen und Vinylacetat mit einem auf das Copolymer bezogenen Vinylacetatanteil von 33 Gew.-%
DCPD-Harz: Dicyclopentadienharz
Carbonsäureamid: Octadecanamid
Treibmittel: Isooctan enthaltende Mikrokapseln
Metallseife: Zinkstearat

Von den so hergestellten Beschichtungszusammensetzungen wurde die Viskosität rotierend (Platte/Platte) bei 140°C mit einem Rheometer "Physica MCR 301" der Firma Anton Paar und das Speichermodul oszillierend (Platte/Platte) bei 20°C in GPa ebenfalls mit einem Rheometer "Physica MCR 301" der Firma Anton Paar gemessen.

Zudem wurde das Curling eines mit der entsprechenden Beschichtungszusammensetzung beschichteten Substrats gemessen. Hierzu wurden die Beschichtungszusammensetzungen der Beispiele in einem ersten Schritt aufgeschmolzen und die so erhaltenen Schmelzen wurden in einem zweiten Schritt in zwei verschiedenen Schichtdicken von 200 µm und 100 µm gleichmäßig auf ein Tapetenvlies aufgetragen. Nach dem Abkühlen wurde die Planlage der so hergestellten beschichteten Substrate bestimmt.

Die entsprechenden Ergebnisse sind in der nachfolgende Tabelle zusammengefasst. Figur 1 zeigt den photographischen Vergleich mit einer nach dem Stand der Technik hergestellten Tapete.

Von den so hergestellten Beschichtungszusammensetzungen wurde die Viskosität rotierend (Platte/Platte) bei 140°C mit einem Rheometer "Physica MCR 301" der Firma Anton Paar und das Speichermodul oszillierend (Platte/Platte) bei 20°C in GPa ebenfalls mit einem Rheometer "Physica MCR 301" der Firma Anton Paar gemessen.

| **Eigenschaft** | **Beispiel 1 (Gew.-%)** | **Beispiel 2 (Gew.-%)** | **Beispiel 3 (Gew.-%)** |
|---|---|---|---|
| **Curling** | Nicht nennenswert | Nicht nennenswert | Nicht nennenswert |
| **Viskosität 140°C (mPa^{·}s)** | 90.000 | 200.000 | 260.000 |
| **Speichermodul G' 20°C (GPa)** | 12 | 9 | 13 |

Diese Beispiele zeigen, dass die erfindungsgemäßen Beschichtungszusammensetzungen leicht durch Wandklebetechnik verarbeitbar sind und für Wand-, Boden und Deckenbekleidungen geeignete Eigenschaften aufweisen.

## Patentansprüche

1. Beschichtungszusammensetzung zur Herstellung eines beschichteten Substrats und insbesondere zur Herstellung einer beschichteten Wand-, Boden und Deckenbekleidung, welche enthält:
a) 15 bis 80 Gew.-% mindestens eines Ethylenvinylacetat-Copolymers,
b) 0,1 bis 30 Gew.-% mindestens eines Kohlenwasserstoffharzes,
c) 0,1 bis 20 Gew.-% mindestens eines Wachses,
d) 0,1 bis 80 Gew.-% wenigstens eines Füllstoffes,
e) 0,01 bis 20 Gew.-% mindestens eines Gleitmittels, welches ein Carbonsäureamid ist, und
f) 0,0 bis 10 Gew-% optional eines Treibmittels,
wobei die Summe aller Bestandteile 100 Gew.-% beträgt.

2. Beschichtungszusammensetzung nach Anspruch 1, **dadurch gekennzeichnet, dass** das mindestens eine Gleitmittel ein Carbonsäureamid gemäß der allgemeinen Formel
(I) und/oder eines Salzes hiervon ist, 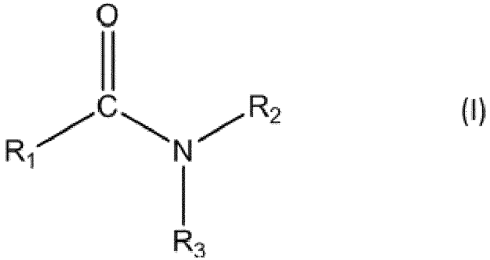 worin
R₁ eine substituierte oder unsubstituierte, geradkettige oder verzweigte Alkylgruppe, eine substituierte oder unsubstituierte, geradkettige oder verzweigte Alkenylgruppe, eine substituierte oder unsubstituierte, geradkettige oder verzweigte Alkinylgruppe, eine substituierte oder unsubstituierte cycloaliphatische Gruppe, eine substituierte oder unsubstituierte aromatische Gruppe, eine substituierte oder unsubstituierte heterozyklische Gruppe, eine substituierte oder unsubstituierte Alkoxygruppe, eine substituierte oder unsubstituierte Alkoxycarbonylgruppe, eine substituierte oder unsubstituierte Carboxylgruppe oder eine substituierte oder unsubstituierte Alkylamidgruppe ist und R₂ und R₃ gleich oder verschieden voneinander sind und Wasserstoff, eine substituierte oder unsubstituierte, geradkettige oder verzweigte Alkylgruppe, eine substituierte oder unsubstituierte, geradkettige oder verzweigte Alkenylgruppe, eine substituierte oder unsubstituierte, geradkettige oder verzweigte Alkinylgruppe, eine substituierte oder unsubstituierte cycloaliphatische Gruppe, eine substituierte oder unsubstituierte aromatische Gruppe, eine substituierte oder unsubstituierte heterozyklische Gruppe, eine substituierte oder unsubstituierte Alkoxygruppe, eine substituierte oder unsubstituierte Alkoxycarbonylgruppe, eine substituierte oder unsubstituierte Carboxylgruppe oder eine substituierte oder unsubstituierte Alkylamidgruppe bedeuten.

3. Beschichtungszusammensetzung nach einem der vorherigen Ansprüche, **dadurch gekennzeichnet, dass** das mindestens eine Gleitmittel ein Carbonsäureamid gemäß der allgemeinen Formel (I) und/oder eines Salzes hiervon ist, worin R₁ eine C₁₀₋₂₄-Alkylgruppe und bevorzugt eine C₁₅₋₂₀-Alkylgruppe ist und R₂ und R₃ gleich oder verschieden voneinander sind und Wasserstoff oder eine substituierte oder unsubstituierte Alkylamidgruppe bedeuten.

4. Beschichtungszusammensetzung nach einem oder mehreren der vorherigen Ansprüche, **dadurch gekennzeichnet, dass** das Carbonsäureamid ein sekundäres bis-Amid ist.

5. Beschichtungszusammensetzung nach einem oder mehreren der vorherigen Ansprüche, **dadurch gekennzeichnet, dass** der Anteil des Vinylacetats in dem mindestens einen Ethylvinylacetat-Copolymer im Bereich von 15 bis 80 Gew.-%, bevorzugt im Bereich von mehr als 18 bis 60 Gew.-%, besonders bevorzugt im Bereich von 20 bis 50 Gew.-% und ganz besonders bevorzugt im Bereich von 25 bis 40 Gew.-% liegt.

6. Beschichtungszusammensetzung nach einem oder mehreren der vorherigen Ansprüche, **dadurch gekennzeichnet, dass** der Anteil des Vinylacetats in dem mindestens einen Ethylvinylacetat-Copolymer im Bereich von 25 bis 80 Gew.-%, bevorzugt im Bereich von mehr als 25 bis 60 Gew.-%, besonders bevorzugt im Bereich von 25 bis 50 Gew.-% und ganz besonders bevorzugt im Bereich von 25 bis 40 Gew.-% liegt.

7. Beschichtungszusammensetzung nach einem oder mehreren der vorherigen Ansprüche, **dadurch gekennzeichnet, dass** als Kohlenwasserstoffharz in der Beschichtungszusammensetzung mindestens ein aus der aus aliphatischen Harzen, cycloaliphatischen Harzen, Inden-Cumaron-Harzen, Polystyrolharzen, Polymethylstyrolharzen und beliebigen Mischungen aus zwei oder mehr der vorgenannten Verbindungen bestehenden Gruppe ausgewähltes Harz, bevorzugt ein cycloaliphatisches Harz, ein Inden-Cumaron-Harz und/oder ein Polymethylstyrolharz, besonders bevorzugt ein Dicyclopentadienharz, ein Inden-Cumaron-Harz und/oder ein Poly-alpha-methylstyrolharz und ganz besonders bevorzugt ein Inden-Cumaron-Harz oder ein Dicyclopentadienharz mit einem gewichtsgemittelten Molekulargewicht von 200 bis 1,000 g/mol und/oder ein Poly-alpha-methylstyrolharz mit einem gewichtsgemittelten Molekulargewicht von 500 bis 2,000 g/mol enthalten ist.

8. Beschichtungszusammensetzung nach einem oder mehreren der vorherigen Ansprüche, **dadurch gekennzeichnet, dass** das mindestens ein Wachs ein Polyolefinwachs, bevorzugt ein Polyethylenwachs und besonders bevorzugt ein Polyethylenwachs mit einem gewichtsgemittelten Molekulargewicht von 500 bis 2,000 g/mol ist.

9. Beschichtungszusammensetzung nach einem oder mehreren der vorherigen Ansprüche, **dadurch gekennzeichnet, dass** der Anteil des Füllstoffs in der Beschichtungszusammensetzung 10 bis 80 Gew.-%, bevorzugt 20 bis 70 Gew.-%, besonders bevorzugt 30 bis 60 Gew.-% und ganz besonders bevorzugt 40 bis 55 Gew.-% beträgt.

10. Beschichtungszusammensetzung nach einem oder mehreren der vorherigen Ansprüche, **dadurch gekennzeichnet, dass** das Gewichtsverhältnis von Füllstoff und Ethylenvinylacetat-Copolymeren der Komponente a) im Bereich von 20 : 80 bis 90 :10, bevorzugt von 30 : 70 bis 80 : 20, insbesondere von 40 : 60 bis 70 : 30 liegt.

11. Beschichtungszusammensetzung nach einem oder mehreren der vorherigen Ansprüche, **dadurch gekennzeichnet, dass** die Beschichtungszusammensetzung ferner als Komponente f) mindestens ein Treibmittel enthält, welches bevorzugt aus der Gruppe ausgewählt ist, die aus Mikrohohlkugeln, Metallcarbonaten, Azodicarbonamid, Oxybisbenzolsulfonylhydrazid, C₃₋₁₀-Alkanen und/oder Mischungen aus zwei oder mehr der vorgenannten Verbindungen besteht.

12. Beschichtungszusammensetzung nach einem oder mehreren der vorherigen Ansprüche, **dadurch gekennzeichnet, dass** diese enthält:
a) 20 bis 50 Gew.-% eines statistischen Ethylvinylacetat-Copolymers, das außer den Comonomeren Ethen und Vinylacetat kein weiteres Comonomer enthält,
b) 1 bis 20 Gew.-% eines aus der aus aliphatischen Harzen, cycloaliphatischen Harzen, Inden-Cumaron-Harzen, Polystyrolharzen, Polymethylstyrolharzen und beliebigen Mischungen aus zwei oder mehr der vorgenannten Verbindungen bestehenden Gruppe ausgewähltes Kohlenwasserstoffharzes,
c) 0,5 bis 15 Gew.-% mindestens eines Polyolefinwachses,
d) 20 bis 70 Gew.-% eines aus der aus Calciumcarbonat, Mischungen aus Calciumcarbonat und Magnesiumcarbonat, Aluminiumhydroxid, Bariumsulfat und beliebigen Mischungen aus zwei oder mehr der vorgenannten Verbindungen bestehenden Gruppe ausgewählten Füllstoffes und
e) 0,05 bis 5 Gew.-% eines Carbonsäureamids gemäß der allgemeinen Formel (I) und/oder eines Salzes hiervon ist, worin R₁ eine C₁₀₋₂₄-Alkylgruppe ist und R₂ und R₃ gleich oder verschieden voneinander sind und Wasserstoff oder eine substituierte oder unsubstituierte Alkylamidgruppe bedeuten,
wobei die Summe aller Bestandteile 100 Gew.-% beträgt.

13. Beschichtetes Substrat und insbesondere eine beschichtete Wand-, Boden und Deckenbekleidung, welches ein bahnförmiges Substrat umfasst, das zumindest abschnittsweise auf zumindest einer seiner beiden Seiten mit einer Beschichtungszusammensetzung nach einem oder mehreren der vorherigen Ansprüche beschichtet ist.

14. Verfahren zur Herstellung eines beschichteten Substrats und insbesondere einer beschichteten Wand-, Boden und Deckenbekleidung, wobei dieses folgende Verfahrensschritte umfasst:
(i) Bereitstellen eines bahnförmigen Substrats, bevorzugt einer Tapete
(ii) Bereitstellen einer Beschichtungszusammensetzung nach einem oder mehreren der vorherigen Ansprüche 1 bis 12;
(iii) Aufbringen der Beschichtungszusammensetzung auf zumindest einen Abschnitt oder mindestens einer Seite des Substrats, bevorzugt vollflächig auf eine der beiden Seiten des Substrats
(iv) Aushärten, Verfestigen und/oder Erkalten der Beschichtungszusammensetzung,
(v) optional Bedrucken der Beschichtungszusammensetzung
(vi) optional Heißverformung der Beschichtungszusammensetzung,
(vii) optional laminieren/kaschieren einer dünnen Folie.

15. Verfahren zur Herstellung eines beschichteten Substrats nach Anspruch 14, **dadurch gekennzeichnet, dass** das Aufbringen der Beschichtungszusammensetzung auf das bahnförmige Substrat nach einem Streichverfahren, Spritzverfahren oder Druckverfahren, bevorzugt nach einem Druckverfahren erfolgt.

16. Verfahren zur Herstellung eines beschichteten Substrats nach Anspruch 15, **dadurch gekennzeichnet, dass** das Druckverfahren ausgewählt ist aus der Gruppe bestehend aus Siebdruckverfahren, Tiefdruckverfahren, Hochdruckverfahren oder Inkjetdruckverfahren, besonders bevorzugt aus Rotationssiebdruckverfahren, Flach-Siebdruckverfahren, Rotations-Tiefdruckverfahren, Flexodruckverfahren oder Inkjetdruckverfahren,

17. Verwendung einer Beschichtungszusammensetzung nach einem oder mehreren der vorherigen Ansprüche 1 bis 12 zur Herstellung eines Wandbelags, insbesondere einer Tapete.

## Claims

1. Coating composition for producing a coated substrate and, in particular, for the production of a coated wall, floor and ceiling covering which contains:
a) 15 to 80% by weight of at least one ethylene vinyl acetate copolymer,
b) 0.1 to 30% by weight of at least one hydrocarbon resin,
c) 0.1 to 20% by weight of at least one wax,
d) 0.1 to 80% by weight of at least one filler,
e) 0.01 to 20% by weight of at least one lubricant which is a carboxylic acid amide and
f) optionally, 0.0 to 10% by weight of a blowing agent, wherein the total of all components is 100% by weight.

2. Coating composition according to Claim 1, **characterized in that** the at least one lubricant is a carboxylic acid amide according to the general formula (1) and/or a salt thereof, 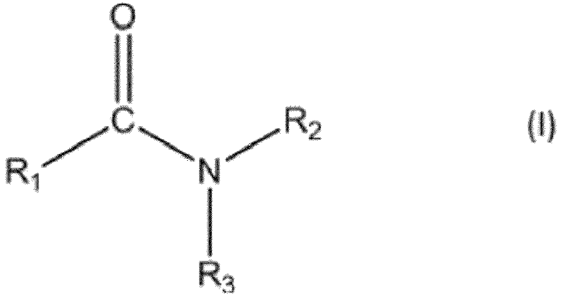 wherein
R₁ is a substituted or unsubstituted, straight-chain or branched alkyl group, a substituted or unsubstituted, straight-chain or branched alkenyl group, a substituted or unsubstituted, straight-chain or branched alkynyl group, a substituted or unsubstituted cycloaliphatic group, a substituted or unsubstituted aromatic group, a substituted or unsubstituted heterocyclic group, a substituted or unsubstituted alkoxy group, a substituted or unsubstituted alkoxycarbonyl group, a substituted or unsubstituted carboxyl group, or a substituted or unsubstituted alkylamide group, and R₂ and R₃ are the same or different from one another and represent hydrogen, a substituted or unsubstituted, straight-chain or branched alkyl group, a substituted or unsubstituted, straight-chain or branched alkenyl group, a substituted or unsubstituted, straight-chain or branched alkynyl group, a substituted or unsubstituted cycloaliphatic group, a substituted or unsubstituted aromatic group, a substituted or unsubstituted heterocyclic group, a substituted or unsubstituted alkoxy group, a substituted or unsubstituted alkoxycarbonyl group, a substituted or unsubstituted carboxyl group, or a substituted or unsubstituted alkylamide group.

3. Coating composition according to any one of the preceding claims, **characterized in that** the at least one lubricant is a carboxylic acid amide according to the general formula (1) and/or a salt thereof, wherein R₁ is a C₁₀₋₂₄ alkyl group and preferably a C₁₅₋₂₀ alkyl group and R₂ and R₃ are the same or different from one another and represent hydrogen or a substituted or unsubstituted alkylamide group.

4. Coating composition according to any one or more of the preceding claims, **characterized in that** the carboxylic acid amide is a secondary bis-amide.

5. Coating composition according to any one or more of the preceding claims, **characterized in that** the proportion of vinyl acetate in the at least one ethylene vinyl acetate copolymer is in the range of 15 to 80% by weight, preferably in the range of more than 18 to 60% by weight, particularly preferably in the range of 20 to 50% by weight and quite particularly preferably in the range of 25 to 40% by weight.

6. Coating composition according to any one or more of the preceding claims, **characterized in that** the proportion of vinyl acetate in the at least one ethylene vinyl acetate copolymer is in the range of 25 to 80% by weight, preferably in the range of more than 25 to 60% by weight, particularly preferably in the range of 25 to 50% by weight and quite particularly preferably in the range of 25 to 40% by weight.

7. Coating composition according to any one or more of the preceding claims, **characterized in that** as the hydrocarbon resin in the coating composition, at least one resin selected from the group consisting of aliphatic resins, cycloaliphatic resins, indene-coumarone resins, polystyrene resins, polymethylstyrene resins, and any mixtures of two or more of the aforementioned compounds is contained, preferably a cycloaliphatic resin, an indene-coumarone resin and/or a polymethyl styrene resin, particularly preferably a dicyclopentadiene resin, an indene-coumarone resin and/or a poly-alpha-methylstyrene resin and most preferably an indene-coumarone resin or a dicyclopentadiene resin with a weight-average molecular weight of 200 to 1000 g/mol and/or a poly-alpha-methylstyrene resin with a weight-average molecular weight of 500 to 2000 g/mol.

8. Coating composition according to any one or more of the preceding claims, **characterized in that** the at least one wax is a polyolefin wax, preferably a polyethylene wax and particularly preferably a polyethylene wax with a weight-average molecular weight of 500 to 2,000 g/mol.

9. Coating composition according to any one or more of the preceding claims, **characterized in that** the proportion of the filler in the coating composition is 10 to 80% by weight, preferably 20 to 70% by weight, particularly preferably 30 to 60% by weight and quite particularly preferably 40 to 55% by weight.

10. Coating composition according to any one or more of the preceding claims, **characterized in that** the weight ratio of filler to ethylene vinyl acetate copolymers of component a) is in the range of 20:80 to 90: 10, preferably of 30:70 to 80:20, in particular of 40:60 to 70:30.

11. Coating composition according to any one or more of the preceding claims, **characterized in that** the coating composition further contains as component f) at least one blowing agent which is preferably selected from the group consisting of microspheres, metal carbonates, azodicarbonamide, oxybisbenzolsulfonylhydrazide, C₃₋₁₀ alkanes and/or mixtures of two or more of the aforementioned compounds.

12. Coating composition according to any one or more of the preceding claims, **characterized in that** it comprises:
a) 20 to 50% by weight of a statistical ethylene vinyl acetate copolymer that contains no further comonomer other than the comonomers ethylene and vinyl acetate,
b) 1 to 20% by weight of a hydrocarbon resin selected from the group consisting of aliphatic resins, cycloaliphatic resins, indene-coumarone resins, polystyrene resins, polymethylstyrene resins, and any mixtures of two or more of the aforementioned compounds,
c) 0.5 to 15% by weight of at least one polyolefin wax,
d) 20 to 70% by weight of a filler selected from the group consisting of calcium carbonate, mixtures of calcium carbonate and magnesium carbonate, aluminium hydroxide, barium sulphate and any mixtures of two or more of the aforementioned compounds,
e) 0.05 to 5% by weight of a carboxylic acid amide according to the general formula (I) and/or a salt thereof, wherein R₁ is a C₁₀₋₂₄ alkyl group and R₂ and R₃ are the same or different from one another and represent hydrogen or a substituted or unsubstituted alkylamide group, wherein the total of all components is 100% by weight.

13. Coated substrate and, in particular, a coated wall, floor and ceiling covering which comprises a sheet-like substrate that is at least partially coated on at least one of its two sides with a coating composition according to any one or more of the preceding claims.

14. Method for producing a coated substrate and, in particular, a coated wall, floor and ceiling covering, wherein this comprises the following steps:
(i) providing a sheet-like substrate, preferably wallpaper
(ii) providing a coating composition according to any one or more of Claims 1 to 12;
(iii) applying the coating composition to at least one section or at least one side of the substrate, preferably completely on one of the two sides of the substrate
(iv) curing, solidifying, and/or cooling the coating composition
(v) optionally printing the coating composition
(vi) optionally hot-forming the coating composition
(vii) optionally laminating/bonding a thin film.

15. Method for producing a coated substrate according to Claim 14, **characterized in that** the application of the coating composition to the sheet-like substrate is carried out by a coating, spraying or printing process, preferably by a printing process.

16. Method for producing a coated substrate according to Claim 15, **characterized in that** the printing process is selected from the group consisting of screen printing, gravure printing, letterpress printing, or inkjet printing, particularly preferably from rotation screen printing, flat screen printing, rotary gravure printing, flexographic printing or inkjet printing.

17. Use of a coating composition according to any one or more of Claims 1 to 12 for the production of a wall covering, in particular wallpaper.

## Revendications

1. Composition d'enduction permettant de fabriquer un substrat enduit et en particulier permettant de fabriquer un revêtement enduit de mur, de sol et de plafond contenant :
a) entre 15 et 80 % en poids d'au moins un copolymère d'éthylène-acétate de vinyle,
b) entre 0,1 et 30 % en poids d'au moins une résine hydrocarbonée,
c) entre 0,1 et 20 % en poids d'au moins une cire,
d) entre 0,1 et 80 % en poids d'au moins une charge,
e) entre 0,01 et 20 % en poids d'au moins un lubrifiant qui est un amide d'acide carboxylique, et
f) éventuellement entre 0,0 et 10 % en poids d'un agent expansif,
la somme de tous les composants étant de 100 % en poids.

2. Composition d'enduction selon la revendication 1, **caractérisée en ce que** le au moins un lubrifiant est un amide d'acide carboxylique selon la formule générale (I) et/ou un sel de celui-ci, 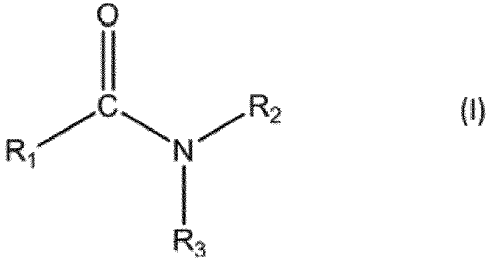 où
R₁ est un groupe alkyle substitué ou non substitué, à chaîne droite ou ramifiée, un groupe alcényle substitué ou non substitué, à chaîne droite ou ramifiée, un groupe alcynyle substitué ou non substitué, à chaîne droite ou ramifiée, un groupe cycloaliphatique substitué ou non substitué, un groupe aromatique substitué ou non substitué, un groupe hétérocyclique substitué ou non substitué, un groupe alcoxy substitué ou non substitué, un groupe alcoxycarbonyle substitué ou non substitué, un groupe carboxyle substitué ou non substitué ou un groupe alkylamide substitué ou non substitué, et R₂ et R₃ sont identiques ou différents et représentent de l'hydrogène, un groupe alkyle substitué ou non substitué, à chaîne droite ou ramifiée, un groupe alcényle substitué ou non substitué, à chaîne droite ou ramifiée, un groupe alcynyle substitué ou non substitué, à chaîne droite ou ramifiée, un groupe cycloaliphatique substitué ou non substitué, un groupe aromatique substitué ou non substitué, un groupe hétérocyclique substitué ou non substitué, un groupe alcoxy substitué ou non substitué, un groupe alcoxycarbonyle substitué ou non substitué, un groupe carboxyle substitué ou non substitué ou un groupe alkylamide substitué ou non substitué.

3. Composition d'enduction selon l'une quelconque des revendications précédentes, **caractérisée en ce que** le au moins un lubrifiant est un amide d'acide carboxylique de formule générale (I) et/ou un de ses sels, où R₁ est un groupe alkyle en C₁₀ à C₂₄ et de manière préférée un groupe alkyle en C₁₅ à C₂₀ et R₂ et R₃ sont identiques ou différents l'un de l'autre et représentent de l'hydrogène ou un groupe alkylamide substitué ou non substitué.

4. Composition d'enduction selon une ou plusieurs des revendications précédentes, **caractérisée en ce que** l'amide d'acide carboxylique est un bis-amide secondaire.

5. Composition d'enduction selon une ou plusieurs des revendications précédentes, **caractérisée en ce que** la proportion d'acétate de vinyle dans le au moins un copolymère d'éthylène-acétate de vinyle se situe dans la plage comprise entre 15 et 80 % en poids, de manière préférée dans la plage comprise entre plus de 18 et 60 % en poids, de manière particulièrement préférée dans la plage comprise entre 20 et 50 % en poids et de manière la plus particulièrement préférée dans la plage comprise entre 25 et 40 % en poids.

6. Composition d'enduction selon une ou plusieurs des revendications précédentes, **caractérisée en ce que** la proportion d'acétate de vinyle dans le au moins un copolymère d'éthylène-acétate de vinyle se situe dans la plage comprise entre 25 et 80 % en poids, de manière préférée dans la plage comprise entre plus de 25 et 60 % en poids, de manière particulièrement préférée dans la plage comprise entre 25 et 50 % en poids et de manière la plus particulièrement préférée dans la plage comprise entre 25 et 40 % en poids.

7. Composition d'enduction selon une ou plusieurs des revendications précédentes, **caractérisée en ce qu'**au moins une résine choisie dans le groupe constitué des résines aliphatiques, des résines cycloaliphatiques, des résines indène-coumarone, des résines de polystyrène, des résines de polyméthylstyrène et des mélanges quelconques de deux ou plus de deux des composés précités, de manière préférée une résine cycloaliphatique, une résine indène-coumarone et/ou une résine de polyméthylstyrène, de manière particulièrement préférée une résine de dicyclopentadiène, une résine indène-coumarone et/ou une résine de polyalphaméthylstyrène et de manière la plus particulièrement préférée une résine indène coumarone ou une résine de dicyclopentadiène avec un poids moléculaire moyen compris entre 200 et 1 000 g/mol et/ou une résine de polyalphaméthylstyrène avec un poids moléculaire moyen compris entre 500 et 2 000 g/mol est contenue dans la composition d'enduction en tant que résine hydrocarbonée.

8. Composition d'enduction selon une ou plusieurs des revendications précédentes, **caractérisée en ce que** la au moins une cire est une cire de polyoléfine, de manière préférée une cire de polyéthylène et de manière particulièrement préférée une cire de polyéthylène avec un poids moléculaire moyen compris entre 500 et 2 000 g/mol.

9. Composition d'enduction selon une ou plusieurs des revendications précédentes, **caractérisée en ce que** la proportion de la charge dans la composition d'enduction est comprise entre 10 et 80 % en poids, de manière préférée comprise entre 20 et 70 % en poids, de manière particulièrement préférée comprise entre 30 et 60 % en poids et de manière la plus particulièrement préférée comprise entre 40 et 55 % en poids.

10. Composition d'enduction selon une ou plusieurs des revendications précédentes, **caractérisée en ce que** le rapport pondéral de la charge sur les copolymères d'éthylène-acétate de vinyle du composant a) se situe dans la plage comprise entre 20:80 et 90:10, de manière préférée comprise entre 30:70 et 80:20, de manière particulièrement préférée comprise entre 40:60 et 70:30.

11. Composition d'enduction selon une ou plusieurs des revendications précédentes, **caractérisée en ce que** la composition d'enduction contient en outre en tant que composant f) au moins un agent expansif qui est de manière préférée choisi dans le groupe constitué des microsphères creuses, des carbonates métalliques, de l'azodicarbonamide, de l'oxybisbenzènesulfonylhydrazide, des alcanes en C₃ à C₁₀ et/ou des mélanges de deux ou plus de deux des composés mentionnés ci-dessus.

12. Composition d'enduction selon une ou plusieurs des revendications précédentes, **caractérisée en ce qu'**elle contient :
a) entre 20 et 50 % en poids d'un copolymère statistique d'éthylène-acétate de vinyle ne contenant pas d'autre comonomère que les comonomères d'éthylène et d'acétate de vinyle,
b) entre 1 et 20 % en poids d'une résine hydrocarbonée choisie dans le groupe constitué des résines aliphatiques, des résines cycloaliphatiques, des résines indène-coumarone, des résines de polystyrène, des résines de polyméthylstyrène et les mélanges quelconques de deux ou plus de deux des composés mentionnés ci-dessus,
c) entre 0,5 et 15 % en poids d'au moins une cire de polyoléfine,
d) entre 20 et 70 % en poids d'une charge choisie dans le groupe constitué du carbonate de calcium, des mélanges de carbonate de calcium et de carbonate de magnésium, de l'hydroxyde d'aluminium, du sulfate de baryum et des mélanges quelconques de deux ou plus de deux des composés mentionnés ci-dessus, et
e) entre 0,05 et 5 % en poids d'un amide d'acide carboxylique de formule générale (I) et/ou d'un de ses sels, où R₁ est un groupe alkyle en C₁₀ à C₂₄ et R₂ et R₃ sont identiques ou différents l'un de l'autre et représentent de l'hydrogène ou un groupe alkylamide substitué ou non substitué,
la somme de tous les composants étant de 100% en poids.

13. Substrat enduit et en particulier revêtement enduit de mur, de sol et de plafond, qui comprend un substrat en forme de bande enduit au moins par sections sur au moins une de ses deux faces avec une composition d'enduction selon une ou plusieurs des revendications précédentes.

14. Procédé de fabrication d'un substrat enduit et en particulier d'un revêtement enduit de mur, de sol et de plafond, comprenant les étapes de procédé ci-dessous consistant à :
(i) fournir un substrat en forme de bande, de manière préférée un papier peint
(ii) fournir une composition d'enduction selon une ou plusieurs des revendications précédentes 1 à 12 ;
(iii) appliquer la composition d'enduction sur au moins une partie ou au moins une face du substrat, de manière préférée sur toute la surface de l'une des deux faces du substrat
(iv) durcir, solidifier et/ou refroidir la composition d'enduction,
(v) éventuellement imprimer la composition de revêtement
(vi) éventuellement déformer à chaud la composition de revêtement,
(vii) éventuellement stratifier/contrecoller un film mince.

15. Procédé de fabrication d'un substrat enduit selon la revendication 14, **caractérisé en ce que** l'application de la composition d'enduction sur le substrat en forme de bande s'effectue selon un procédé de couchage, de pulvérisation ou d'impression, de manière préférée selon un procédé d'impression.

16. Procédé de fabrication d'un substrat enduit selon la revendication 15, **caractérisé en ce que** le procédé d'impression est choisi dans le groupe constitué d'un procédé de sérigraphie, d'un procédé d'héliogravure, d'un procédé typographique ou d'un procédé d'impression à jet d'encre, de manière particulièrement préférée est choisi parmi un procédé de sérigraphie rotative, un procédé de sérigraphie à plat, un procédé d'héliogravure rotative, un procédé d'impression flexographique ou un procédé d'impression à jet d'encre,

17. Utilisation d'une composition d'enduction selon une ou plusieurs des revendications précédentes 1 à 12 pour la fabrication d'un revêtement de paroi, en particulier d'un papier peint.
